# EUROPÄISCHE PATENTANMELDUNG

(11) **EP 1 251 299 A2**
(43) Veröffentlichungstag der Anmeldung: **23.10.2002**
(21) Anmeldenummer: 02005696.6
(22) Anmeldetag: 13.03.2002
(51) Int. Cl.: F16H 61/28, F16H 63/18

(54) **Stelleinrichtung für automatisierte Handschaltgetriebe von Kraftfahrzeugen**

(30) Priorität: 19.03.2001 DE 10113161
(71) Anmelder: HYDRAULIK-RING GMBH, D-72622 Nürtingen (DE)
(72) Erfinder: Wild, Andreas, 72669 Unterensingen (DE); Claus, Thomas, 89081 Ulm (DE); Trzmiel, Alfred, 72661 Grafenberg (DE); Meyer, Roland, 91154 Roth (DE)
(74) Vertreter: Kohl, Karl-Heinz

(57) **Zusammenfassung**

Die Stelleinrichtung hat ein drehbares Schaltelement (1), mit dem eine Schaltwelle (17) des Getriebes zum Auswählen der Gassen sowie Einlegen der Gänge drehbar und axial verschiebbar ist. Zum Drehen und zum Axialverschieben der Schaltwelle (17) ist ein Ventil (2, 15) vorgesehen, mit dem das Schaltelement (1) betätigt werden kann. Das Schaltelement ist als Schaltwalze ausgebildet mit einer über den Umfang verlaufenden Steuerkurve.

## Beschreibung

Die Erfindung betrifft eine Stelleinrichtung für automatisierte Handschaltgetriebe von Fahrzeugen, vorzugsweise von Kraftfahrzeugen, nach dem Oberbegriff des Anspruches 1.

Um in einem Schaltgetriebe die Gassen auszuwählen und die Gänge einzulegen, muß die Schaltwelle des Getriebes entsprechend gedreht und axial verschoben werden. Hierfür ist bei bekannten Stelleinrichtungen das Schaltelement vorgesehen, dessen Bewegungen auf die Schaltwelle übertragen werden. Für die Längs- und Drehbewegung sind mehrere Ventile notwendig, um das Schaltelement entsprechend zu betätigen. Dadurch hat diese Stelleinrichtung einen konstruktiv aufwendigen Aufbau. Die große Zahl von Ventilen erfordert eine komplizierte hydraulische Beschaltung.

Der Erfindung liegt die Aufgabe zugrunde, die gattungsgemäße Stelleinrichtung so auszubilden, daß sie bei einfacher konstruktiver Gestaltung eine optimale Bedienung des Schaltgetriebes ermöglicht.

Diese Aufgabe wird bei der gattungsgemäßen Stelleinrichtung erfindungsgemäß mit den kennzeichnenden Merkmalen des Anspruches 1 gelöst.

Bei der erfindungsgemäßen Stelleinrichtung sind nur die beiden Ventile notwendig, um die zur Gassenwahl und zum Gangeinlegen notwendigen Bewegungen der Schaltwelle zu erzeugen. Dadurch hat die Stelleinrichtung einen konstruktiv einfachen Aufbau. Die hydraulische Beschaltung der Ventile kann dadurch einfach gehalten werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: einen Hydraulikplan einer erfindungsgemäßen Stelleinrichtung,
- Fig. 2: in einer Darstellung entsprechend Fig. 1 eine zweite Ausführungsform einer erfindungsgemäßen Stelleinrichtung,
- Fig. 3: in einer Darstellung entsprechend Fig. 1 eine weitere Ausführungsform einer erfindungsgemäßen Stelleinrichtung,
- Fig. 4: in einer Darstellung entsprechend Fig. 1 eine weitere Ausführungsform einer erfindungsgemäßen Stelleinrichtung,
- Fig. 5: eine Druckversorgung der erfindungsgemäßen Stelleinrichtung,
- Fig. 6: eine zweite Ausführungsform einer Druckversorgung für die erfindungsgemäße Stelleinrichtung,
- Fig. 7: in perspektivischer Darstellung eine Schaltwalze der erfindungsgemäßen Stelleinrichtung,
- Fig. 8: die Schaltwalze gemäß Fig. 7 in Seitenansicht,
- Fig. 9: die Schaltwalze gemäß Fig. 7 in Vorderansicht,
- Fig. 10: die Abwicklung einer Steuerkurve der Schaltwalze gemäß den Fig. 7 bis 9,
- Fig. 11: einen Schnitt längs der Linie XI-XI in Fig. 10,
- Fig. 12: teilweise im Schnitt und teilweise in perspektivischer Darstellung eine Rasteinrichtung,
- Fig. 13: die Rasteinrichtung gemäß Fig. 12 in Raststellung,
- Fig. 14: im Schnitt die Ausgangsstellung einer Doppelkupplung, die mit der Stelleinrichtung betätigbar ist,
- Fig. 15: die Doppelkupplung gemäß Fig. 14 in einer Mittelstellung,
- Fig. 16: die Doppelkupplung gemäß Fig. 14 in einer Kupplungsstellung,
- Fig. 17: die Abwicklung der Schaltwalze der erfindungsgemäßen Stellvorrichtung mit zugehörigem Schaltschema,
- Fig. 18: die zum Schaltschema gemäß Fig. 17 gehörende Schaltwalze,
- Fig. 19: in Vorderansicht einen Antrieb für die Schaltwalze,
- Fig. 20: den Antrieb gemäß Fig. 19 in Seitenansicht,
- Fig. 21: teilweise in Ansicht und teilweise im Schnitt eine Kupplung zur Verwendung bei der erfindungsgemäßen Stelleinrichtung,
- Fig. 22: die Kupplung gemäß Fig. 21 im Axialschnitt,
- Fig. 23: in vergrößerter Darstellung und im Schnitt eine Nachstelleinrichtung für eine Kupplung,
- Fig. 24 und Fig. 25: zwei Schaltwalzen zum Einsatz bei der Stelleinrichtung gemäß Fig. 4,
- Fig. 26: in Seitenansicht eine Steuerungseinheit einer weiteren Ausführungsform einer erfindungsgemäßen Stelleinrichtung,
- Fig. 27: einen Längsschnitt durch die Steuerungseinheit gemäß Fig. 26,
- Fig. 28: die Steuerungseinheit gemäß Fig. 26 in perspektivischer Darstellung,
- Fig. 29: einen Schnitt längs der Linie XXIX-XXIX in Fig. 27,
- Fig. 30: den Momentenverlauf der Doppelkupplung gemäß den Fig. 14 bis 16.

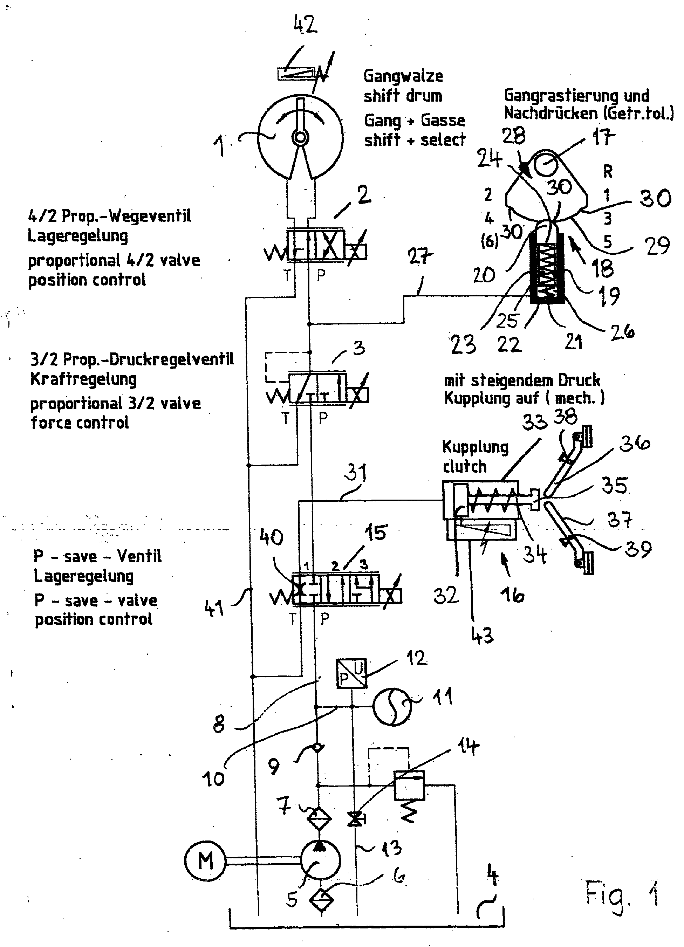

Die Stelleinrichtung ist für ein automatisiertes Handschaltgetriebe von Kraftfahrzeugen vorgesehen. Der Fahrer des Kraftfahrzeuges kann über ein herkömmliches mechanisches Schaltgetriebe den Schalthebel bewegen. Allerdings muß er hierbei die Kupplung nicht betätigen, da dies durch die Stelleinrichtung automatisch vorgenommen wird. Fig. 1 zeigt eine Stelleinrichtung mit einer Schaltwalze 1, der ein 4/2-Proportionalwegeventil 2 vorgeschaltet ist. Ihm ist ein Proportionaldruckregelventil 3 vorgeschaltet. Das Hydraulikmedium wird einem Tank 4 mittels einer Pumpe 5 entnommen, der jeweils ein Filter 6 und 7 vor- und nachgeschaltet ist. In der Pumpenleitung 8 sitzt hinter dem Filter 7 ein gegen den Tank 4 schließendes Rückschlagventil 9. Hinter dem Rückschlagventil 9 zweigt von der Pumpenleitung 8 eine Querleitung 10 zu einem Druckspeicher 11 für das Hydraulikmedium ab. Der Druck im Druckspeicher 11 wird mit einem entsprechenden Manometer 12 gemessen. Von der Querleitung 10 zweigt eine Tankleitung 13 ab, in der ein Absperrhahn 14 sitzt, der zum Entleeren des Druckspeichers 11 geöffnet wird, so daß das Hydraulikmedium aus dem Druckspeicher 11 über die Tankleitung 13 zum Tank 4 zurückfließen kann.

Die Pumpenleitung 8 führt zu einem Drucksicherheitsventil 15, das dem 3/2-Proportionaldruckregelventil 3 vorgeschaltet ist.

Eine Kupplung 16 des Kraftfahrzeuges wird hydraulisch betätigt und ist so ausgebildet, daß sie mit steigendem Druck öffnet.

Um einen Gang einzulegen bzw. zu wechseln, wird zunächst das Drucksicherheitsventil 15 geöffnet, so daß das Hydraulikmedium von der Pumpe 5 über die Pumpenleitung 8, das geöffnete Drucksicherheitsventil 15 zum Proportionaldruckregelventil 3 strömen kann, das aus der in Fig. 1 gezeichneten Schaltstellung verstellt worden ist. Das nachfolgende Proportionalwegeventil 2 ist so geschaltet, daß die Schaltwalze 1 in die gewünschte Richtung gedreht wird. Erst wenn dieses Ventil 2 entsprechend geschaltet wird, wird das Proportionaldruckregelventil 3 geöffnet. Das unter Druck stehende Hydraulikmedium dreht dann die Schaltwalze 1 in der gewünschten Richtung. Die Schaltwalze 1 ist, wie noch beschrieben werden wird, mit einer Schaltwelle 17 des Schaltgetriebes so verbunden, daß die Schaltwalze 1 die Schaltwelle 17 entsprechend dreht bzw. axial verschiebt.

Sobald der gewünschte Gang des Schaltgetriebes eingelegt ist, wird das Proportionalwegeventil 2 in die Regelstellung gebracht. Diese Schaltung des Ventils 2 erfolgt kurz bevor die Schaltwelle 17 in die gewünschte Endlage gelangt. Dies hat den Vorteil, daß zunächst bei voll geöffnetem Ventil 2 die Schaltwelle 17 rasch aus ihrer jeweiligen Lage in Richtung auf die neue Lage verstellt wird. Erst kurz vor Erreichen der neuen Lage wird durch Umschalten des Ventils 2 in die Regelstellung die Schaltwelle 17 ohne Überschwingen in die gewünschte Lage gebracht.

Damit die Schaltwelle 17 unabhängig von Toleranzen in der Schaltwalze 1 und/oder im Getriebe in die Endstellung gelangt, ist eine Rasteinrichtung 18 vorgesehen. Sie hat wenigstens einen Rastbolzen 19, dessen freies Ende 20 kalottenförmig ausgebildet ist und der unter der Kraft wenigstens einer Druckfeder 21 steht. Sie stützt sich mit einem Ende an einem Boden 22 eines napfförmigen-Gehäuses 23 und mit ihrem anderen Ende an einem Boden 24 einer zentralen Vertiefung 25 des Rastbolzens 19 ab. Das Gehäuse 23 begrenzt zusammen mit dem Rastbolzen 19 einen Druckraum 26, in den eine Leitung 27 mündet, die von der Pumpenleitung 8 abzweigt. Über die Querleitung 27 gelangt das Hydraulikmedium in den Druckraum 26 und beaufschlagt den Rastbolzen 19 in Richtung auf seine Raststellung. Durch die zusätzliche Druckbeaufschlagung wird der Rastbolzen 19 zuverlässig in seine Raststellung gedrückt, und zwar unabhängig von vorhandenen Getriebetoleranzen. Auf der Schaltwelle 17 sitzt drehfest ein Rastgegenglied 28, das kreissektorförmig ausgebildet ist und seiner gekrümmten Stirnseite 29 drei mit Abstand voneinander liegende Rastvertiefungen 30 aufweist, in welche der Rastbolzen 19 je nach Drehstellung der Schaltwelle 17 eingreift. Im darge stellten Ausführungsbeispiel kann die Schaltwelle in drei Stellungen gedreht werden, so daß entsprechend drei Rastvertiefungen 30 vorgesehen sind. Sollte die Schaltwelle 17 ihre exakte Lage innerhalb des eingelegten Ganges nicht erreichen, wird durch die hydraulische Druckbeaufschlagung des Rastbolzens 19 sichergestellt, daß über das Rastgegenglied 28 die Schaltwelle 17 in die genaue Lage gedreht wird, in welcher der Rastbolzen 19 in die zugehörige Rastvertiefung 30 eingreift.

Sobald die jeweilige Drehstellung der Schaltwelle 17 erreicht ist, kann das Druckregelventil 3 geschlossen werden, so daß die Zuführung des Hydraulikmediums zur Leitung 27 gesperrt ist und der Rastbolzen 19 nicht mehr unter Hydraulikkraft steht. Die Schaltwelle 17 wird dann nur noch durch die geringe Kraft der Druckfeder 21 über den Rastbolzen 19 positioniert.

Um die Kupplung 16 des Kraftfahrzeuges zu öffnen, wird das Drucksicherheitsventil 15 in die Schaltstellung 3 gebracht. Das über die Pumpenleitung 8 strömende Hydraulikmedium gelangt dadurch in eine Kupplungsleitung 31, wodurch ein Kupplungskolben 32 in einem Kupplungszylinder 33 mit Hydraulikmedium beaufschlagt wird, wodurch die Kupplung 16 in bekannter Weise geöffnet wird. Die Kupplung 16 ist so ausgebildet, daß sie mit steigendem Druck geöffnet wird. Hierzu sitzt auf einer Kolbenstange 34 außerhalb des Kupplungszylinders 33 ein kolbenförmiges Druckelement 35, das auf die freien Enden zweier zweiarmiger Hebel drückt, die dadurch entgegengesetzt zueinander um ihre jeweiligen Lagerachsen 38, 39 geschwenkt werden.

Das Drucksicherheitsventil 15 ist in bekannter Weise so ausgebildet, daß es die Position des Kolbens 32 regelt und damit auch die Drehmomentübertragung der Kupplung 16. In der Schaltstellung 1 des Drucksicherheitsventils 15 is die Kupplungsleitung 31 über eine Drosselstelle 40 an eine Tankleitung 41 angeschlossen, über welche das Hydraulikmedium zurück zum Tank 4 strömen kann.

Die jeweilige Drehlage der Schaltwalze 1 wird durch einen Drehwinkelsensor 42 erfaßt, der entsprechende Signale an eine (nicht dargestellte) Steuerung sendet. Die Kupplung 16 ist mit einem Drehwegsensor 43 ausgestattet, der ebenfalls an diese Steuerung angeschlossen ist und mit dem der Verschiebeweg des Kupplungskolbens 32 erfaßt werden kann.

Um einen Gang des Schaltgetriebes einzulegen bzw. zu wechseln, wird zunächst das Drucksicherheitsventil 15 geöffnet, so daß über die Druckleitung 8 das Hydraulikmedium aus dem Tank 4 in Richtung auf die Schaltwalze 1 strömt. Das Ventil 2 wird so geschaltet, daß die Schaltwalze 1 in die gewünschte Richtung gedreht wird. Dann wird das Druckregelventil 3 geöffnet, so daß das Hydraulikmedium über das Ventil 2 zur Schaltwalze 1 gelangt, die durch das unter Druck stehende Hydraulikmedium in der notwendigen Richtung gedreht wird, wodurch die Schaltwelle 17, die drehfest mit der Schaltwalze 1 verbunden ist, im gewünschten Maße gedreht bzw. verschoben wird.

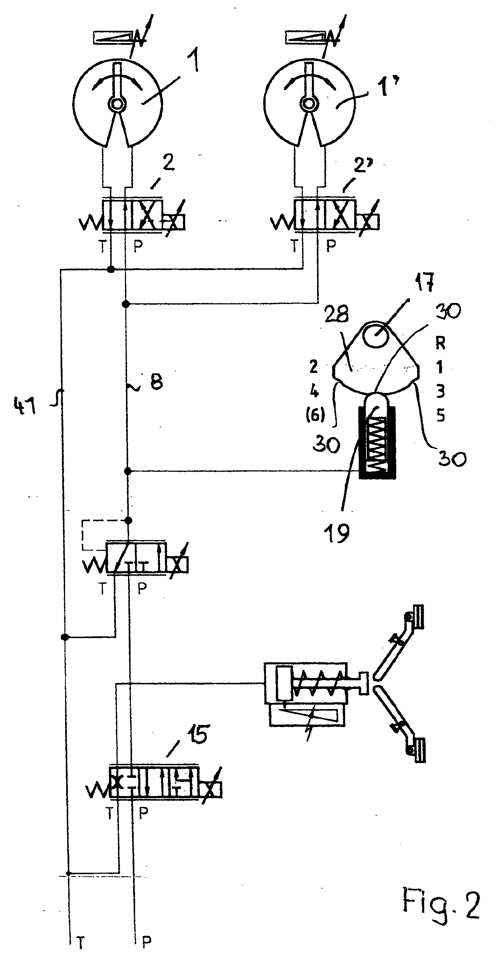

Bei der Ausführungsform nach Fig. 2 sind für die Gangwahl und die Gassenwahl zwei getrennte Schaltwalzen 1, 1' vorgesehen, denen jeweils ein Wegeventil 2, 2' vorgeschaltet ist. Diese beiden Ventile 2, 2' liegen in der Druckleitung 8 bzw. in der Tankleitung 41. Im übrigen ist diese Ausführungsform gleich ausgebildet wie das Ausführungsbeispiel nach Fig. 1.

Mit der Schaltwalze 1 wird durch Drehen um ihre Achse der jeweilige Gang eingelegt, während mit der Schaltwalze 1' durch Drehen um ihre Achse die jeweilige Gasse des Schaltgetriebes ausgewählt wird. Die beiden Ventile 2, 2' werden zeitlich nacheinander geschaltet, so daß zunächst die Gasse ausgewählt und anschließend in der ausgewählten Gasse der gewünschte Gang eingelegt wird. Dementsprechend erfolgt die Ansteuerung der Ventile 2, 2' durch eine entsprechende (nicht dargestellte) Steuerung. Die Schaltwalze 17 dieses Schaltgetriebes hat wiederum die drei Rastvertiefungen 30 für den Rastbolzen 19. Entsprechend dem vorigen Ausführungsbeispiel hat das drehfest auf der Schaltwelle sitzende Rastgegenglied 28 drei Rastvertiefungen 30, die den drei Gassen des Schaltgetriebes zugeordnet sind.

Das Rastgegenglied 28 ist so dick, daß es beim Axialverschieben der Schaltwelle 17 stets in Eingriff mit dem Rastbolzen 19 bleibt. Dementsprechend sind die Rastvertiefungen 30 bei der Ausführungsform nach den Fig. 1 und 2 entsprechende nutförmige, achsparallele Vertiefungen.

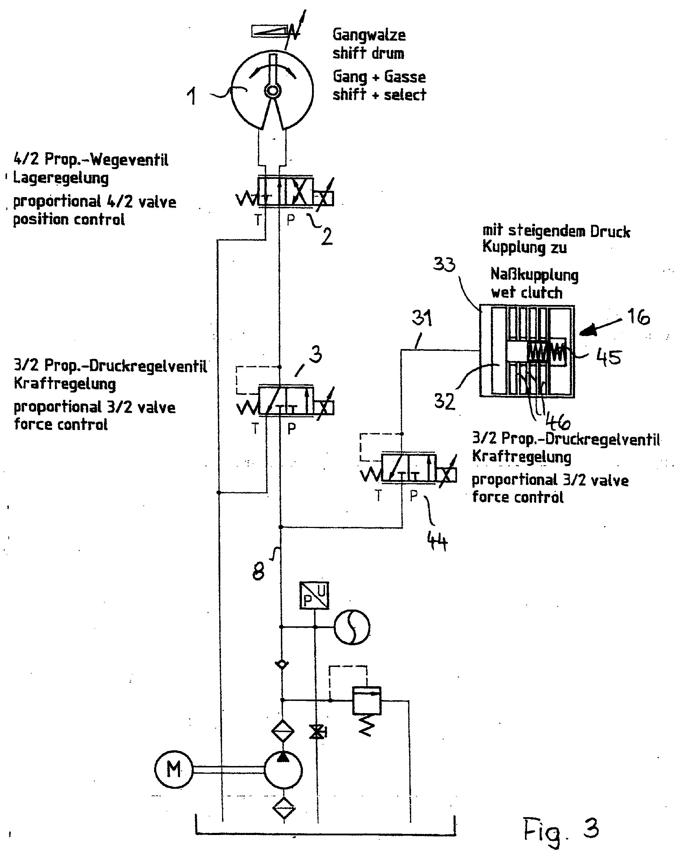

Beim Ausführungsbeispiel nach Fig. 3 ist wiederum nur die einzige Schaltwalze 1 vorgesehen, mit der in noch näher zu beschreibender Weise die Gassen des Schaltgetriebes ausgewählt und die Gänge eingelegt werden Dieses Ausführungsbeispiel unterscheidet sich von der Ausführungsform gemäß Fig. 1 lediglich dadurch, daß die Kupplung 16 eine Naßkupplung ist, die mit steigendem Druck schließt. Der Kupplung 16 ist ein Druckregelventil 44, im Ausführungsbeispiel ein 3/2-Proportionaldruckregelventil, vorgeschaltet, das in der Kupplungsleitung 31 sitzt. Ist das Ventil 44 geöffnet, gelangt das Hydraulikmedium über die Druckleitung 8 und die Kupplungsleitung 31 in den Kupplungszylinder 33, in dem das Hydraulikmedium den Kupplungskolben 32 beaufschlagt. Dadurch wird der Kupplungskolben 32 in Fig. 3 gegen die Kraft der Druckfeder 45 nach rechts verschoben, wodurch die Kupplungsscheiben 46 fest gegeneinander gedrückt werden. Im Unterschied zu den beiden vorigen Ausführungsbeispielen wird somit die Kupplung 16 mit steigendem Druck des Hydraulikmediums geschlossen. Das Druckregelventil 44 regelt in bekannter Weise das durch die Kupplung 16 zu übertragende Drehmoment.

Die Gassenauswahl sowie das Gangeinlegen des Schaltgetriebes erfolgen bei dieser Ausführungsform in gleicher Weise, wie anhand von Fig. 1 erläutert worden ist. Die einzige Schaltwalze 1 dient somit sowohl zur Gassenwahl als auch zum Gangeinlegen. Das Drucksicherheitsventil 15 der beiden vorigen Ausführungsbeispiele ist der Ausführungsform nach Fig. 3 nicht vorgesehen, kann aber selbstverständlich auch hier eingesetzt werden.

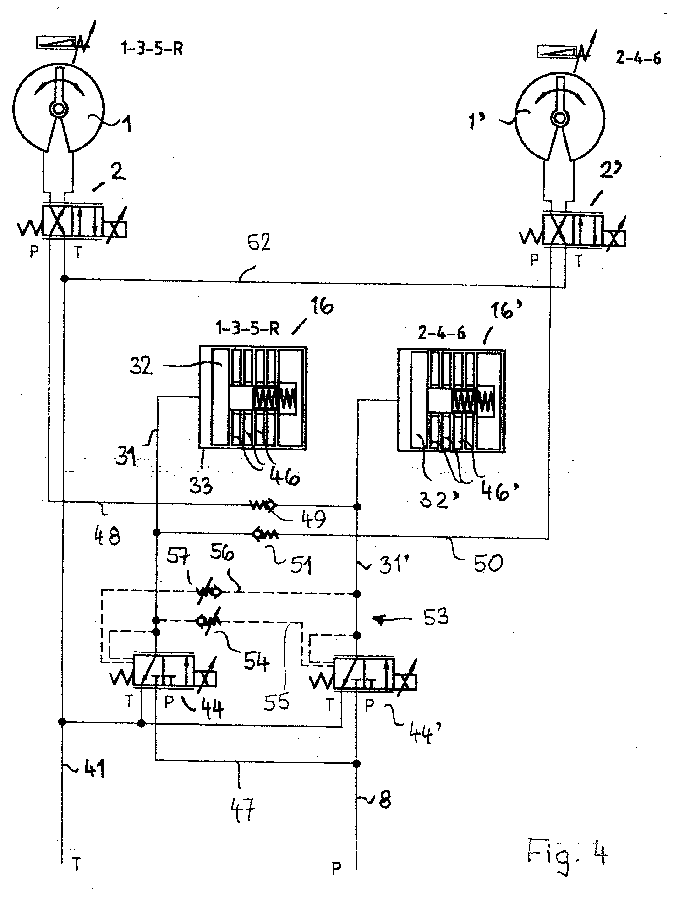

Bei der Ausführungsform nach Fig. 4 sind die beiden Schaltwalzen 1, 1' vorgesehen, mit denen jeweils die Gänge des Schaltgetriebes eingelegt werden. Die Schaltwalze 1 dient beispielhaft zum Einlegen der Gänge 1, 3, 5 und R, während die Schaltwalze 1' zum Einlegen der Gänge 2, 4, 6 vorgesehen ist. Für beide Schaltwalzen 1, 1' ist jeweils eine Kupplung 16, 16' vorgesehen, die im Ausführungsbeispiel als Naßkupplung entsprechend der Ausführungsform gemäß Fig. 3 ausgebildet ist. Die Kupplungen 16, 16' können aber auch entsprechend der Ausführungsform gemäß den Fig. 1 und 2 ausgebildet sein. Die Schaltwalzen 1, 1' weisen mehrere (nicht dargestellte) Kulissenführungen auf, in die jeweils (nicht dargestellte) Schaltgabeln des Schaltgetriebes eingreifen.

Wird beispielsweise mit der Schaltwalze 1 ein Gang eingelegt, ist die zugehörige Kupplung 16 geöffnet, so daß der Kupplungskolben 32 nicht durch Hydraulikmedium beaufschlagt ist. Das im Kupplungszylinder 33 der Kupplung 16 befindliche Hydraulikmedium strömt über die Kupplungsleitung 31 und das geschlossene Druckregelventil 44 in die Tankleitung 41. Die Kupplung 16' ist während des Gangeinlegens mittels der Schaltwalze 1 hingegen geöffnet, so daß das Hydraulikmedium über die Druckleitung 8 zur Kupplung 16' gelangen und deren Kolben 32' beaufschlagen kann. Die Kupplungsscheiben 46' der Kupplung 16' werden dadurch fest gegeneinander gedrückt.

Der Kupplung 16' ist das Druckregelventil 44' vorgeschaltet, das vorteilhaft ebenfalls ein 3/2-Proportionaldruckregelventil ist. Dieses Ventil 44' sitzt in der Pumpenleitung 8, von der in Strömungsrichtung des Hydraulikmediums vor dem Ventil 44' eine Leitung 47 abzweigt, in welcher das Druckregelventil 44 sitzt. Das Ventil 44' ist über die Kupplungsleitung 31' mit der Kupplung 16' verbunden. Von der Kupplungsleitung 31' zweigt im Bereich zwischen dem Ventil 44' und der Kupplung 16' eine Druckleitung 48 ab, in der ein gegen die Kupplung 16' sperrendes Rückschlagventil 49 sitzt und zum Ventil 2 führt.

Entsprechend zweigt von der Kupplungsleitung 31 im Bereich zwischen dem Ventil 44 und der Kupplung 16 die Druckleitung 50 ab, in der ein in Richtung auf die Kupplung 16 sperrendes Rückschlagventil 51 sitzt und die zum Ventil 2' führt.

Wird beispielsweise mit der Schaltwalze 1 ein Gang eingelegt, ist die zugehörige Naßkupplung 16' geöffnet. Die andere Naßkupplung 16 ist dann geschlossen, d.h. das zugehörige Druckregelventil 44 ist geöffnet. Dementsprechend erfolgt der Antrieb des Kraftfahrzeuges über den mittels der Schaltwalze 1' eingelegten Gang. Sobald an der Schaltwalze 1 der neue Gang eingelegt ist, wird die zugehörige Kupplung 16' geschlossen und die Kupplung 16 entsprechend geöffnet. Dieses gleichzeitige Öffnen und Schließen der beiden Naßkupplungen 16, 16' führt dazu, daß das zu übertragende Drehmoment nicht auf Null abfallen kann, sondern daß das Drehmoment lediglich um einen bestimmten Betrag verringert wird.

Je nachdem welche Schaltwalze 1, 1' betätigt werden soll, wird das Druckregelventil 44 oder das Druckregelventil 44' geschlossen. Soll die Schaltwalze 1' betätigt werden, wird das Druckregelventil 44 aus der in Fig. 4 dargestellten Stellung umgeschaltet, so daß das Hydraulikmedium über die Pumpenleitung 8 und die Leitung 47 über das umgeschaltete Ventil 44 in die Kupplungsleitung 31 gelangt. Der Kupplungskolben 32 der Kupplung 16 wird dadurch mit Hydraulikmedium beaufschlagt, so daß die Kupplungsscheiben 46 fest gegeneinander gedrückt werden. Über die Druckleitung 50 strömt das unter Druck stehende Hydraulikmedium zur Schaltwalze 1'. Das Ventil 2' ist entsprechend der gewünschten Drehrichtung der Schaltwalze 1' geschaltet. Durch die Drehung der Schaltwalze 1' wird auch Hydraulikmedium über eine Tankleitung 52 zur Tankleitung 41 zurückgeführt. Das Druckregelventil 44' nimmt hierbei die in Fig. 4 dargestellte Lage ein, so daß die Kupplung 16' nicht unter Druck steht und geöffnet ist.

Entsprechend umgekehrte Verhältnisse liegen vor, wenn die Schaltwalze 1 betätigt werden soll.

Damit nicht beide Kupplungen 16, 16' gleichzeitig vollständig geschlossen werden können, ist eine Sicherheitseinrichtung 53 vorgesehen. Wird beispielsweise das Druckregelventil 44 geöffnet, dann wird in der beschriebenen Weise die Kupplung 16 geschlossen und die Schaltwalze 1' beaufschlagt, um dort den gewünschten Gang vorzuwählen. Der in der Kupplungsleitung 31 wirkende Hydraulikdruck wirkt über ein Rückschlagventil 54 der Sicherheitseinrichtung 53 auf das Druckregelventil 44. Hierzu zweigt von der Kupplungsleitung 31 in Strömungsrichtung hinter dem Druckregelventil 44 eine Leitung 55 ab, in der das Rückschlagventil 54 sitzt und die zum Druckregelventil 44' führt. Das über diese Leitung 55 strömende, unter Druck stehende Hydraulikmedium stellt sicher, daß das Druckregelventil 54 nicht vollständig geöffnet werden kann. Das Rückschlagventil 54 ist zu diesem Zweck einstellbar, so daß das Druckregelventil 44' nur zu einem durch das Rückschlagventil 54 eingestellten Betrag geöffnet werden kann.

In gleicher Weise zweigt von der Kupplungsleitung 31' in Strömungsrichtung hinter dem Druckregelventil 44' eine Leitung 56 ab, in der ein regelbares, in Richtung auf das Druckregelventil 44 öffnendes Rückschlagventil 57 sitzt. Wird das Druckregelventil 44' geöffnet, dann wird der Kupplungskolben 32' der Kupplung 16' mit Druck beaufschlagt, wodurch die Kupplungsscheiben 46' fest zusammengedrückt werden. Über die Leitung 56 wirkt der Hydraulikdruck auf das Druckregelventil 44. Infolge des Rückschlagventils 57 der Sicherheitseinrichtung 53 ist gewährleistet, daß das Druckregelventil 44 nicht vollständig geöffnet wird, sondern nur zu dem durch das Rückschlagventil 57 eingestellten Betrag.

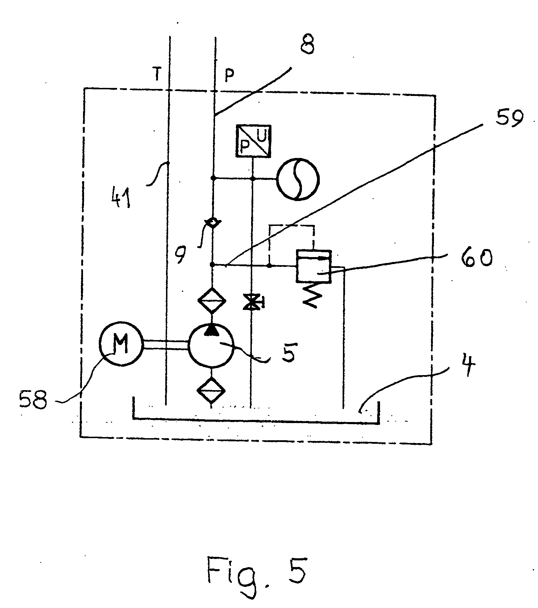

Bei den Ausführungsformen nach den Fig. 1 bis 4 kann die Druckversorgung so ausgebildet sein, daß die Pumpe 5 nicht permanent angetrieben wird. In diesem Falle wird als Antrieb für die Pumpe 5 ein Elektromotor 58 verwendet (Fig. 5). Im Bereich zwischen der Pumpe 5 und dem Rückschlagventil 9 zweigt von der Pumpenleitung 8 eine Querleitung 59 ab, in der ein Sicherheitsventil 60 sitzt. Sollte der Druck in der Pumpenleitung 8 einen vorgegebenen Wert überschreiten, öffnet das Sicherheitsventil 60, so daß die Pumpenleitung 8 zum Tank 4 hin geöffnet wird und der Druck abgebaut werden kann.

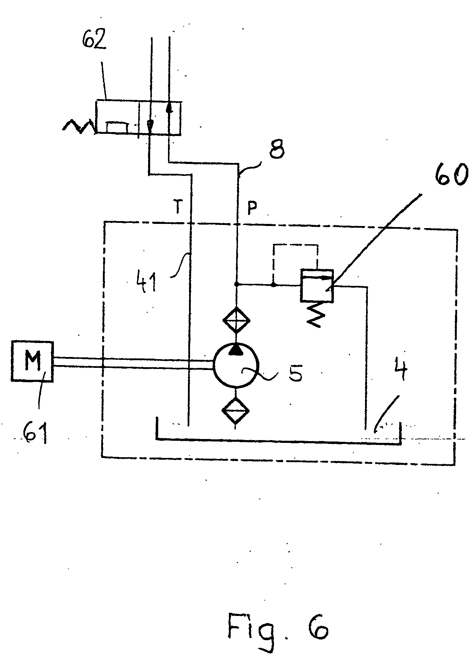

Fig. 6 zeigt eine Ausführungsform, bei der die Pumpe 5 durch einen Motor 61 permanent angetrieben wird. Der Motor 61 ist in diesem Falle der Verbrennungsmotor des Kraftfahrzeuges. Damit bei dieser ständig angetriebenen Pumpe 5 nicht unnötig Hydraulikmedium im Kreislauf gepumpt wird, ist ein Ventil 62 vorgesehen, das dann, wenn das Hydraulikmedium nicht mehr zum Schalten der Schaltwalzen 1,1' benötigt wird, umgeschaltet wird. Ist ein Schaltvorgang notwendig, nimmt das Ventil 62 die in Fig. 6 dargestellte Schaltstellung ein. Ist der Schaltvorgang abgeschlossen und Hydraulikmedium für die Schaltwalzen 1, 1' nicht mehr notwendig, wird das Ventil 62 umgeschaltet, so daß das von der Pumpe 5 über die Pumpenleitung 8 geförderte Hydraulikmedium über das umgeschaltete Ventil 62 über die Tankleitung 41 zurück zum Tank 4 strömt. Das Ventil 62 ist an eine entsprechende Steuerung angeschlossen, mit der das Ventil in der notwendigen Weise umgeschaltet wird. Die Druckversorgung gemäß Fig. 6 weist ebenfalls das Sicherheitsventil 60 auf, um entsprechend der Ausführungsform nach Fig. 5 den Systemdruck zu begrenzen.

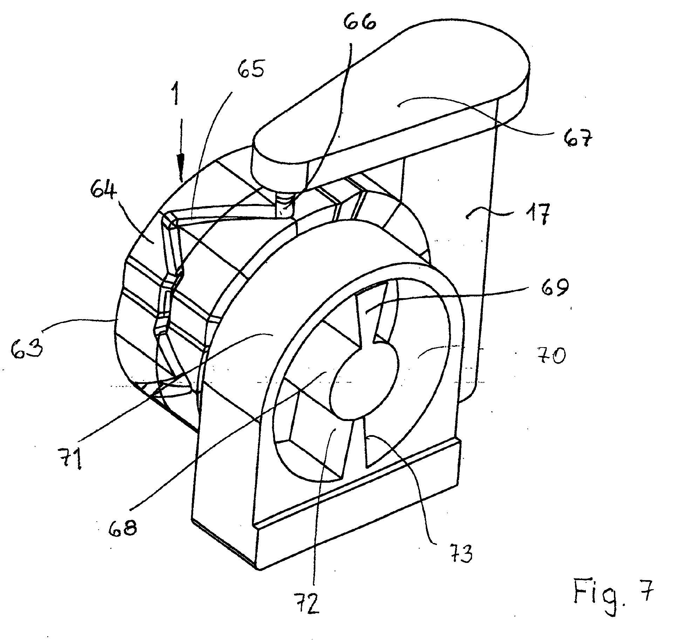

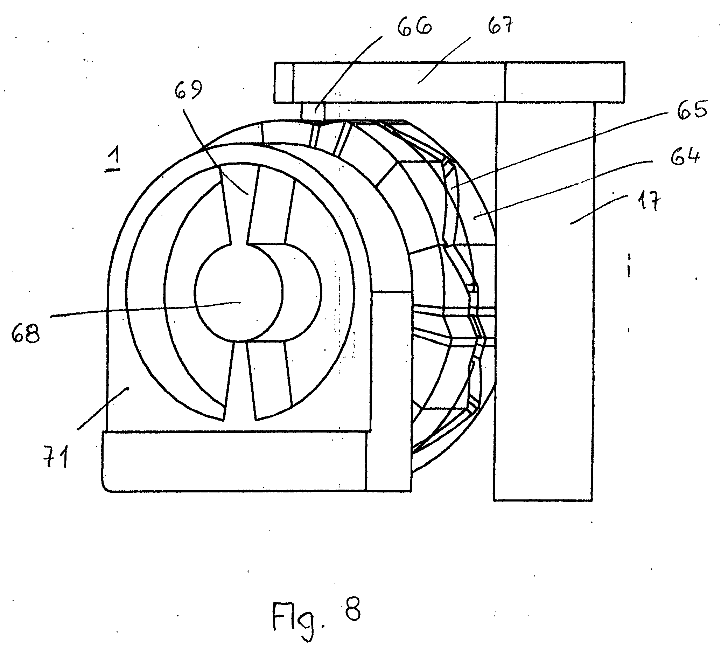

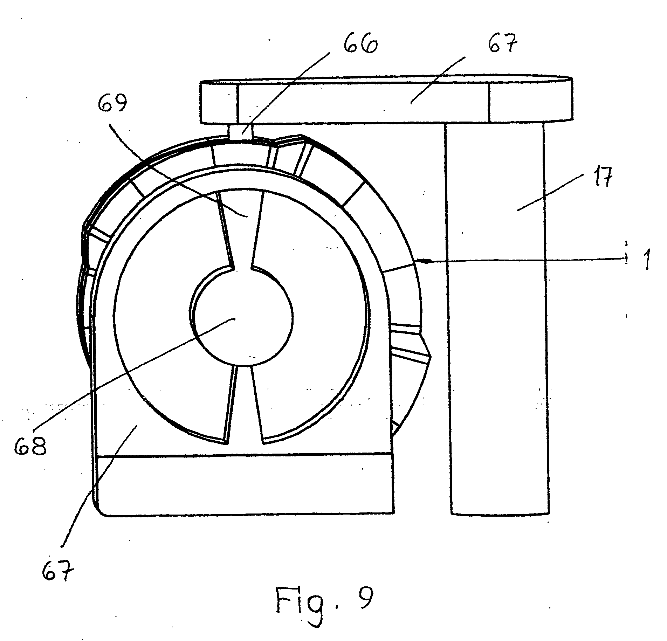

Die Fig. 7 bis 10 zeigen ein Ausführungsbeispiel der Schaltwalze 1 bzw. 1'. Sie hat einen Walzenkörper 63, in dessen Mantelfläche 64 eine Steuerkurve 65 vorgesehen ist. In sie greift ein Kulissenstein 66 ein, der von einem Arm 67 absteht, der drehfest auf der Schaltwelle 17 des Getriebes befestigt ist. Die Achse der Schaltwelle 17 liegt senkrecht zur Achse der Schaltwalze 1.

Von der Stirnseite des Walzenkörpers 63 steht eine Achse 68 ab, die einen radialen Flügel 69 trägt. Er bildet einen Rotationskolben, der vom Hydraulikmedium auf beiden Seiten beaufschlagt werden kann. Der Flügel 69 befindet sich in einem Druckraum 70 eines Gehäuses 71. Der Druckraum 70 wird durch den Flügel 69 in zwei Räume unterteilt, in die jeweils eine Leitung für das Hydraulikmedium mündet. Je nach Stellung des Ventils 2, 2' gelangt das Hydraulikmedium in den einen oder anderen Druckraum und beaufschlagt die entsprechende Seitenfläche des Flügels 69. Dementsprechend wird die Schaltwalze 1 in der jeweiligen Richtung gedreht. Das im jeweils anderen, nicht mit Druck beaufschlagten Druckraum befindliche Hydraulikmedium strömt über die Tankleitung 41 (Fig. 1) zum Tank zurück.

Der Walzenkörper 63 bzw. die Steuerkurve 65 sind so ausgebildet, daß die Schaltwelle 17 sowohl um ihre Achse gedreht als auch längs ihrer Achse verschoben wird, wenn die Schaltwalze 1 gedreht wird.

Der Druckraum 70 wird in Umfangsrichtung durch zwei Wände 72, 73 begrenzt, an denen der Flügel 69 in der jeweiligen Endstellung zur Anlage kommen kann.

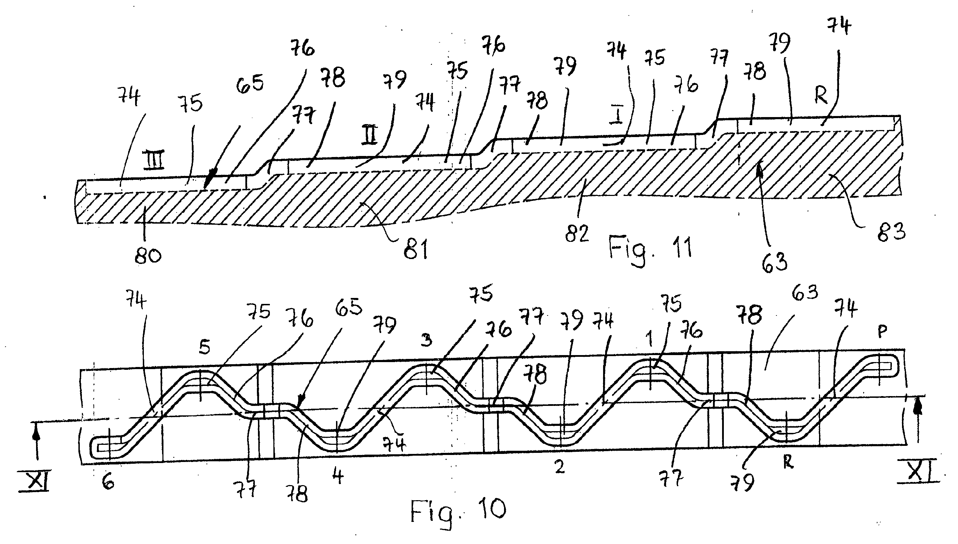

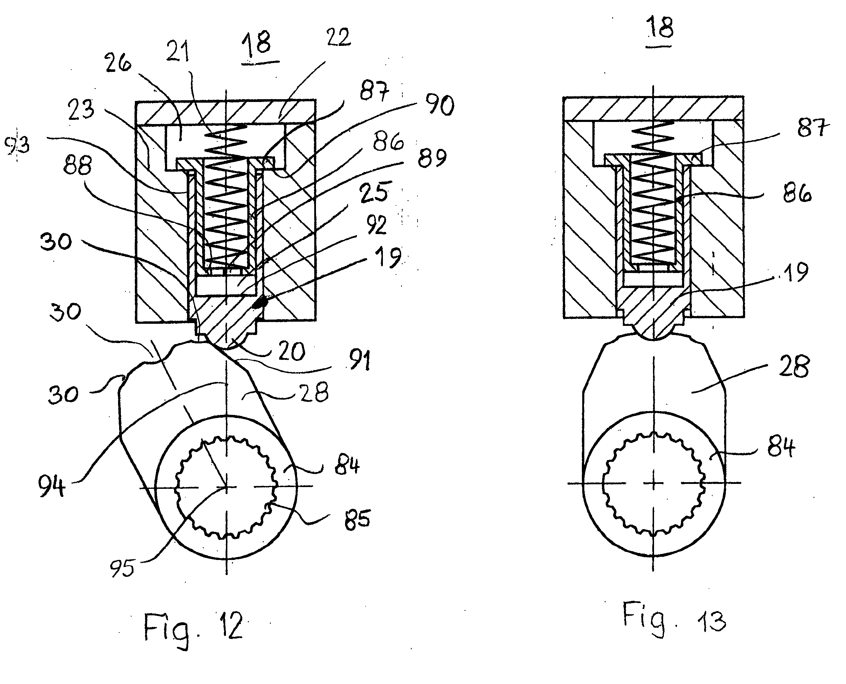

Die Fig. 10 und 11 zeigen die Abwicklung der Mantelfläche 64 der Schaltwalze 1. Wie Fig. 10 zeigt, verläuft die Steuerkurve 65 in Umfangsrichtung des Walzenkörpers 63 in unterschiedlichen Richtungen. Dementsprechend wird die Schaltwalze 17, die mittels des Kulissensteins 66 in die Steuerkurve 65 eingreift, entsprechend um ihre Achse gedreht. Befindet sich der Kulissenstein 66 am in Fig. 10 linken Ende der Steuerkurve 65, ist die Schaltwelle 17 so um ihre Achse gedreht, daß der sechste Gang des Schaltgetriebes eingelegt ist. Um vom sechsten in den fünften Gang zu schalten, wird die Schaltwalze 1 entsprechend gedreht. Der Kulissenstein 66 gelangt dadurch in einen schrägen Kurvenabschnitt 74. Dies hat zur Folge, daß während des Drehens der Schaltwalze 1 die Schaltwelle 17 durch den dem schrägen Kurvenabschnitt 74 folgenden Kulissenstein 66 um ihre Achse gedreht wird. Dieser schräge Kurvenabschnitt 74 geht in einen parallel zur Umfangslinie in den Kurvenabschnitt 75 über. Befindet sich der Kulissenstein 66 in diesem Kurvenabschnitt 75, ist die Schaltwelle 17 so gedreht, daß der fünfte Gang eingelegt ist.

Dieser Kurvenabschnitt 75 geht in einen entgegengesetzt schräg zum Kurvenabschnitt 74 verlaufenden Kurvenabschnitt 76 über, der in halber axialer Breite des Walzenkörpers 63 über einen parallel zum Kurvenabschnitt 75 liegenden Kurvenabschnitt 77 in einen weiteren, im Ausführungsbeispiel parallel zum Kurvenabschnitt verlaufenen Kurvenabschnitt 78 übergeht. Er schließt an einen geraden Kurvenabschnitt 79 an, der parallel zum Kurvenabschnitt 75 liegt und nahe der gegenüberliegenden Stirnseite des Walzenkörpers 63 vorgesehen ist. Befindet sich der Kulissenstein 66 im Kurvenabschnitt 79, ist die Schaltwelle 17 so gedreht, daß der vierte Gang des Schaltgetriebes eingelegt ist.

Ausgehend vom Kurvenabschnitt 79 wiederholen sich nunmehr die Kurvenabschnitte, so daß der Kulissenstein 66 nacheinander die verschiedenen Kurvenabschnitte durchläuft und die Schaltwelle 17 jeweils so dreht, daß die Gänge 3, 2, 1, der Rückwärtsgang R und der Parkgang P eingelegt werden können. Je nach Schräglage der Kurvenabschnitte wird die Schaltwelle 17 in der einen oder anderen Richtung um ihre Achse gedreht.

Die Steuerkurve 65 wechselt nicht nur ihre Richtung längs des Umfanges des Walzenkörpers 63, sondern auch ihre Höhenlage, wie sich aus Fig. 11 ergibt. Die Mantelfläche 64 des Walzenkörpers 63 weist teilzylindrische Mantelabschnitte 80 bis 83 auf. Der Mantelabschnitt 80 hat den kleinsten Außendurchmesser. In ihm sind die Kurvenabschnitte 74 bis 76 der Steuerkurve 65 vorgesehen. Diese Kurvenabschnitte liegen dementsprechend auf dem gleichen Radius.

Der Mantelabschnitt 80 geht in den Mantelabschnitt 81 über, der größeren Außendurchmesser als der Mantelabschnitt 80 aufweist. Der folgende Mantelabschnitt 82 hat wiederum größeren Außendurchmesser als der Mantelabschnitt 81 und kleineren Außendurchmesser als der nachfolgende Mantelabschnitt 83. Die innerhalb der jeweiligen Mantelabschnitte 81 bis 83 liegenden Kurvenabschnitte liegen jeweils auf dem gleichen Radius.

Der Kulissenstein 66 wird somit beim Drehen der Schaltwalze 1 nicht nur in Umfangsrichtung hin- und herbewegt und damit die Schaltwelle 17 um ihre Achse gedreht, sondern beim Übergang zwischen den einzelnen Mantelabschnitten 80 bis 83 auch quer zur Achse der Schaltwalze bewegt. Dies hat zur Folge, daß die Schaltwelle 17 in entsprechendem Maße in ihrer Achsrichtung verschoben wird. Diese Verschiebebewegung der Schaltwelle 17 dient zur Gassenwahl des Schaltgetriebes. Befindet sich der Kulissenstein 66 im Bereich des Mantelabschnittes 60, ist die Gasse III des Schaltgetriebes angewählt, in welcher der fünfte und sechste Gang liegen. Befindet sich der Kulissensten 66 im Bereich des Mantelabschnittes 81, dann ist die Gasse II des Schaltgetriebes angewählt, in welcher der dritte und vierte Gang liegen.

Der Mantelabschnitt 82 entspricht der Gasse I des Schaltgetriebes, in welchem der erste und der zweite Gang liegen.

Gelangt der Kulissenstein 66 schließlich auf den Mantelabschnitt 83, dann ist die Gasse R ausgewählt, in welcher der Rückwärtsgang und der Parkgang P des Schaltgetriebes liegen.

Die Schaltwalze 1 gemäß den Fig. 7 bis 11 ist in der beschriebenen Weise so ausgebildet, daß durch Drehen der Schaltwalze die Schaltwelle 17 zur Gassenwahl verschoben und zur Gangwahl in der ausgewählten Gasse gedreht wird. Da die Steuerkurve 65 so ausgebildet ist, daß sämtliche Gänge des Schaltgetriebes erreicht werden können, ist für die Gassen- und die Gangwahl nur eine einzige Schaltwalze 1 notwendig. Eine derartige Ausführungsform ist in den Fig. 1 und 3 dargestellt.

Hat das Schaltgetriebe hingegen zwei Schaltwalzen 1, 1' entsprechend der Ausführungsform nach Fig. 2, dann sind die Steuerkurven dieser beiden Schaltwalzen so ausgebildet, daß mit der Schaltwalze 1 beispielsweise nur der Gang eingelegt und mit der Schaltwalze 1' die Gasse ausgewählt werden kann. Dementsprechend ist der Walzenkörper der Schaltwalze 1 zylindrisch ausgebildet, da die Steuerkurve in diesem Fall nicht auf unterschiedlichen Durchmessern des Walzenkörpers liegen muß. Dafür ist die Steuerkurve der Schaltwalze 1' so vorgesehen, daß sie auf im Durchmesser unterschiedlichen Mantelabschnitten des Walzenkörpers verläuft. Dementsprechend wird die Schaltwelle 17 beim Drehen der Schaltwalze 1' in Achsrichtung verschoben. Sobald die Gasse ausgewählt ist, wird durch Betätigen der Schaltwalze 1 in der ausgewählten Gasse der gewünschte Gang eingelegt. Beim Drehen der Schaltwalze 1 wird der Kulissenstein 66 in der Steuerkurve lediglich hin- und herbewegt, so daß über den Arm 67 die Schaltwalze 17 im erforderlichen Maße um ihre Achse gedreht wird.

Je nach Zahl der Gänge und Gassen kann die Steuerkurve 65 selbstverständlich auch einen anderen Verlauf in der Mantelfläche des Walzenkörpers 63 haben.

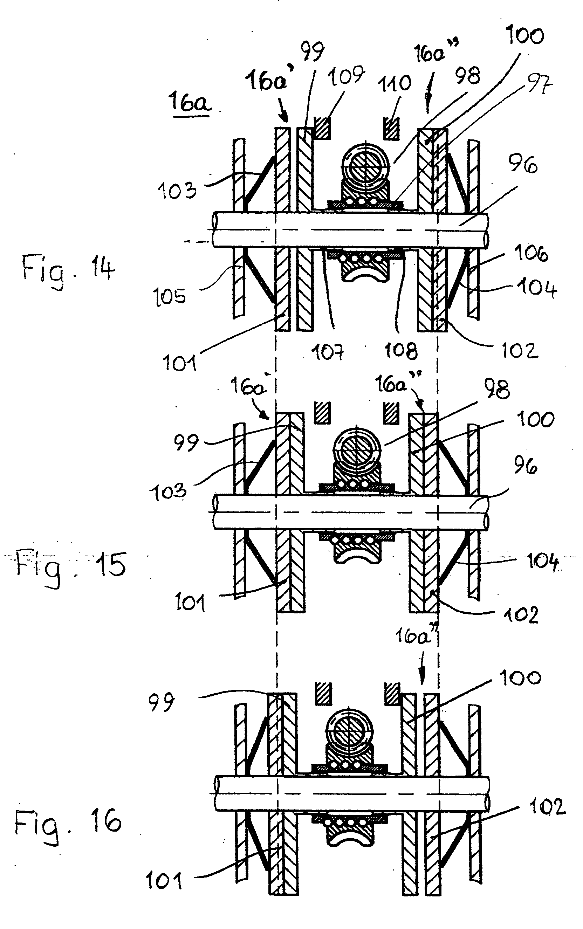

Die Fig. 12 und 13 zeigen ein Ausführungsbeispiel der Rasteinrichtung 18 (Fig. 1), mit welcher die jeweilige Drehlage der Schaltwelle 17 gesichert wird. Das Rastgegenglied 28 steht radial von einem Ring bzw. einer Hülse 84 ab, die mit einer Innenverzahnung 85 versehen ist. Mit ihr greift die Hülse 84 in eine Außenverzahnung auf der Schaltwelle 17 ein, um eine drehfeste Verbindung zwischen der Hülse 84 und der Schaltwelle 17 zu erreichen. Am freien Ende des Rastgegengliedes 28 ist mittig die eine Rastvertiefung 30 vorgesehen, in welche der Rastbolzen 19 mit seinem kalottenförmigen Kopf 20 eingreift. Beiderseits dieser mittleren Rastvertiefung 30 befindet sich jeweils eine weitere Rastvertiefung 30, so daß die Schaltwelle 17 in drei Drehstellungen gesichert werden kann. Je nach Zahl der zu sichernden Drehstellungen der Schaltwelle 17 kann das Rastgegenglied 28 auch weniger oder mehr Rastvertiefungen aufweisen.

Der Rastbolzen 19 hat die zentrale Vertiefung 25, in die eine napfförmige Hülse 86 ragt, die an der Innenwand der Vertiefung 25 gleitend anliegt und an ihrem vom freien Ende 20 des Rastbolzens 19 abgewandten Ende einen radial nach außen gerichteten Flansch 87 aufweist. Er dient als Anschlag für die Hülse 86, die unter der Kraft der Druckfeder 21 steht. Sie ragt in die Hülse 86 und stützt sich mit einem Ende an dem innerhalb des Rastbolzens 19 liegenden Boden 88 der Hülse 86 und mit ihrem anderen Ende am Boden 22 des Gehäuses 23 ab. Der Boden 88 der Hülse 86 hat eine zentrale Öffnung 89.

Der Boden 22 des Gehäuses 23 schließt den Druckraum 26 ab, in den die (nicht dargestellte) Druckleitung 27 (Fig. 1) mündet, über welche das unter Druck stehende Hydraulikmedium zugeführt wird. Die Hülse 86 stützt sich unter der Kraft der Druckfeder 21 und bei Druckbeaufschlagung durch das Hydraulikmedium auch unter dem Hydraulikdruck mit ihrem Flansch 87 an einer dem Boden 22 gegenüberliegenden Wand 90 des Druckraumes 26 ab.

Fig. 12 zeigt eine Stellung der Schaltwelle 17 und damit auch des Rastgegengliedes 28, bei der der Rastbolzen 19 mit seinem freien Ende 20 im Bereich neben der einen Rastvertiefung 30 auf einer Schrägfläche 91 am freien Rand des Rastgegengliedes 28 anliegt. Unter dem Druck des Hydraulikmediums liegt der Rastbolzen 19 an dieser Schrägfläche 91 an. Das in den Druckraum 26 gelangende Hydraulikmedium strömt durch die Hülse 86 und deren Öffnung 89 an eine die Vertiefung 25 begrenzende Endwand 92 des Rastbolzens 19, so daß er nach außen gegen das Rastgegenglied 28 gedrückt wird. Der an der Wandung der Öffnung 93 des Gehäuses 23 anliegende Rastbolzen 19 hat in dieser Stellung geringfügigen Abstand vom Flansch 87 der Hülse 86. Sobald der Rastbolzen 19 mit seinem freien Ende 20 in die Rastvertiefung 30 gelangt, ist er so weit zurückgeschoben, daß der Rastbolzen 19 am Flansch 87 der Hülse 86 anliegt (Fig. 13). Der Rastbolzen 19 und die Schaltwelle 17 sind so einander zugeordnet, daß die Achse 94 des Rastbolzens 19 durch die senkrecht zu ihr liegende Achse 95 der Hülse 84 und damit der Schaltwelle 17 geht. Darüber hinaus liegen die Rastvertiefungen 30 auf dem gleichen Krümmungsradius um die Achse 95, so daß der Rastbolzen 19 in jeder Raststellung am Flansch 87 der Hülse 86 anliegt. Mit der Rasteinrichtung 18 wird sichergestellt, daß die Schaltwelle 17 ihre genaue Lage für den Gangwechsel bzw. die Gassenwahl einnimmt. Durch die Druckbeaufschlagung mittels der Druckfeder 21 und des Hydraulikdruckes wird die Schaltwelle 17 über das Rastgegenglied 28 auf jeden Fall in die Raststellung gedreht, wie sie beispielhaft in Fig. 13 dargestellt ist. Auf diese Weise werden Getriebetoleranzen einwandfrei ausgeglichen.

Da die Schaltwelle 17 je nach Gestaltung des Schaltgetriebes entweder bei der Gassenwahl oder beim Gangeinlegen axial verschoben wird, ist das Rastgegenglied 28 in Achsrichtung der Schaltwelle 17 auf jeden Fall so lang, daß in jeder Schiebelage der Schaltwelle 17 der Rasteingriff möglich ist.

Bei der Ausführungsform gemäß Fig. 4 ist das Schaltgetriebe mit zwei Kupplungen 16, 16' versehen, von denen die Kupplung 16 den Gängen 1, 3, 5, R und die Kupplung 16' den Gängen 2, 4, 6 zugeordnet ist. Die Fig. 14 bis 16 zeigen eine weitere Ausführungsform einer solchen Doppelkupplung 16a. Sie hat eine Achse 96, auf der drehfest eine Spindel 97 sitzt. Sie wird über ein Schneckengetriebe 98 betätigt. Je nach Drehrichtung des Schneckengetriebes 98 wird über die Spindel 97 die Achse 96 nach rechts oder links verschoben. Auf ihr sitzen zwei Kupplungsscheiben 99, 100, denen getriebeseitige Kupplungsscheiben 101, 102 zugeordnet sind. Die beiden getriebeseitigen Kupplungsscheiben 101, 102 stehen jeweils unter der Kraft einer Tellerfeder 103, 104, welche die Kupplungsscheiben 101, 102 in Richtung auf die Kupplungsscheiben 99, 100 belasten. Die Tellerfedern 103, 104 sitzen auf der Achse 96 und stützen sich an kupplungsseitigen Wänden 105, 106 ab, durch welche die Achse 96 ragt.

Die beiden Kupplungsscheiben 99, 100 haben gegeneinander gerichtete hülsenförmige Ansätze 107, 108, die jeweils mit Außengewinde versehen und in Eingriff mit der Spindel 97 sind.

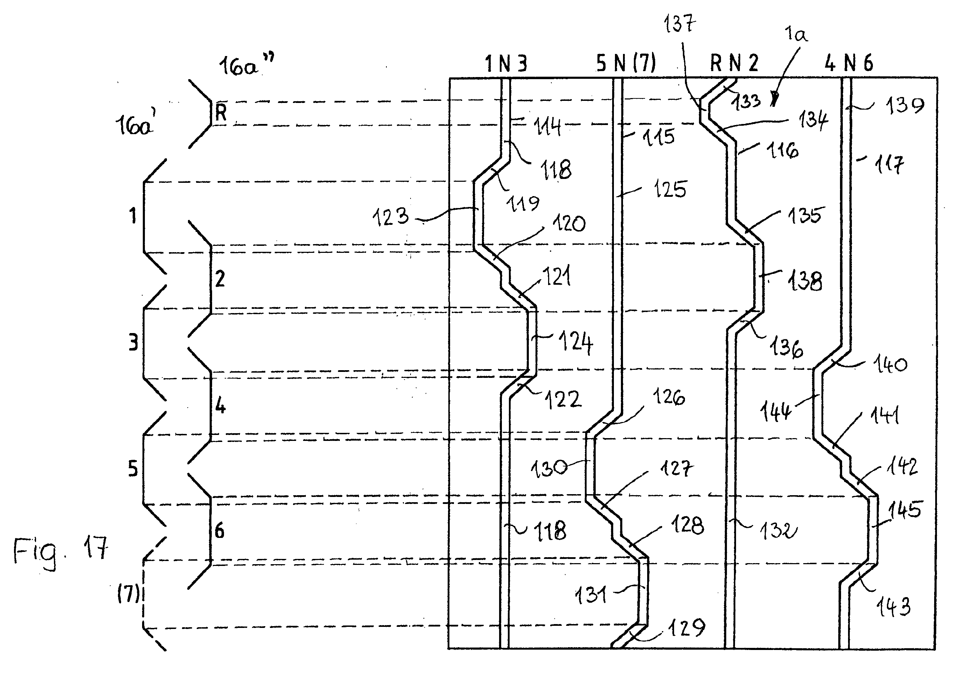

Fig. 14 zeigt die Ausgangsstellung der Kupplung 16a im Leerlauf des Kraftfahrzeuges. In diesem Falle sind die beiden Kupplungsscheiben 100, 102 in Eingriff, während die beiden Kupplungsscheiben 99, 101 außer Eingriff sind. Die Kupplung 16a' erzeugt dementsprechend kein Drehmoment, während die andere Kupplung 16a" 100 % des Drehmomentes erzeugt. Der Kupplung 16a' sind, wie Fig. 17 zeigt, die Gänge 1, 3, 5 und ggf. 7 und der Kupplung 16a" die Gänge 2, 4, 6, R zugeordnet. In der in Fig. 14 dargestellten Lage ist beispielsweise der erste Gang eingelegt, so daß die Kupplungsscheiben 99, 101 der Kupplung 16a' außer Eingriff sind.

Soll das Kraftfahrzeug anfahren, wird über das Schneckengetriebe 98 die Kupplung 16a' geschlossen. Dementsprechend wird das Schneckengetriebe 98 so angetrieben, daß die Achse 96 nach links verschoben wird. Dementsprechend werden die axial fest auf ihnen sitzenden Kupplungsscheiben 99, 100 nach links verschoben. Fig. 15 zeigt eine Mittelstellung beim Verschieben der Achse 96. In dieser Mittelstellung liegen die Kupplungsscheiben 99, 101 und 100, 102 aneinander. Die Vorspannung der Druckfedern 103, 104 ist so gewählt, daß das Drehmoment auf beide Kupplungen 16a', 16a" gleichmäßig verteilt wird. Beide Kupplungen übertragen somit 50 % des Drehmomentes. Am Ende des Schaltvorganges (Fig. 16) sind die beiden Kupplungsscheiben 100, 102 der Kupplung 16a" außer Eingriff, während die Kupplungsscheiben 99, 101 in Eingriff sind. In dieser Stellung ist somit der erste Gang des Schaltgetriebes eingelegt. Nunmehr überträgt die Kupplung 16a' der Doppelkupplung 16a das volle Drehmoment, während die Kupplung 16a" kein Drehmoment übertragen kann.

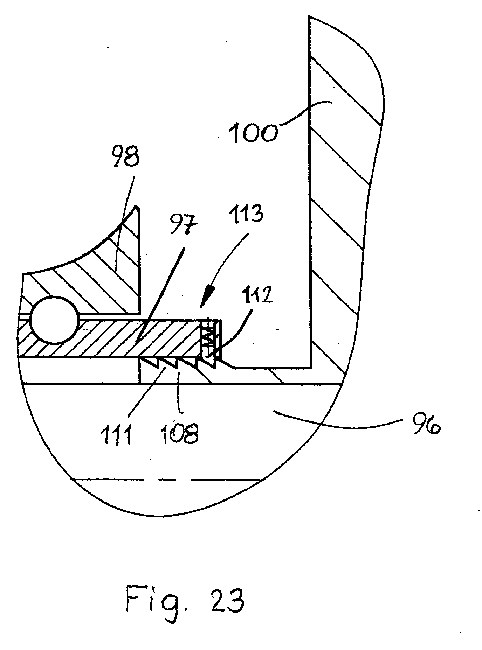

Für die beiden Kupplungsscheiben 99, 100 sind getriebeseitige Anschläge 109, 110 vorgesehen. Sie sind vorteilhaft in Abhängigkeit vom Verschleiß der Kupplungsscheiben 99, 102 nachstellbar. Wie Fig. 23 zeigt, ist im nabenförmigen Ansatz 108 der Kupplungsscheibe 100 eine sägezahnartige Profilierung 111 vorgesehen, in die ein Rastbolzen 112 unter Federkraft eingreift. Er ist in dem über das Schneckengetriebe 98 überstehenden Ende der Spindel 97 untergebracht. Die Profilierung 111 und der Rastbolzen 112 sind so ausgebildet, daß die Kupplungsscheibe 100 nicht in Richtung auf die gegenüberliegende, in Fig. 23 nicht dargestellte Kupplungsscheibe 99 verschoben werden kann, sondern nur in entgegengesetzter Richtung.

Die anhand von Fig. 23 für die Kupplungsscheibe 100 beschriebene Nachstelleinrichtung 113 ist in gleicher Weise auch für die gegenüberliegende Kupplungsscheibe 99 vorgesehen.

Weisen die Kupplungsscheiben 99 bis 102 einen entsprechend großen Verschleiß auf, dann ist ein entsprechend größerer Verstellweg für die Kupplungsscheiben 99, 100 erforderlich, damit sie in Eingriff mit den Kupplungsscheiben 101, 102 gelangen. Dieser größere Verschiebeweg hat zur Folge, daß der Rastbolzen 112 aus der Stellung gemäß Fig. 23 in den links benachbarten Sägezahn der Profilierung 111 eingreift. Durch diese Nachstellung bleibt der Verstellweg der jeweiligen Kupplungsscheibe 99, 100 auch bei zunehmendem Verschleiß etwa konstant.

Die Nachstelleinrichtung für die Kupplungsscheiben kann selbstverständlich auch jede andere geeignete Ausbildung haben, wie beispielsweise Rasteinrichtungen in Form von Scheiben mit planseitiger Sägezahnprofilierung, wie sie an sich bekannt ist.

Wie das Schaltschema gemäß Fig. 17 zeigt, kann, wenn über die Kupplung 16a' der erste Gang eingelegt ist, über die Kupplung 16a" bereits der zweite Gang vorgewählt werden. Ist der zweite Gang eingelegt, kann nunmehr in gleicher Weise über die Kupplung 16a' der dritte Gang eingelegt werden. Auf diese Weise können nacheinander die einzelnen Gänge des Schaltgetriebes eingelegt werden, wobei stets eine der beiden Kupplungen 16a', 16a" geschlossen ist.

Um diese Schaltweise zu ermöglichen, hat die zugehörige Schaltwalze 1a, deren Abwicklung Fig. 17 zeigt, vier Steuerkurven 114 bis 117. In sie greift jeweils ein Kulissenstein der Schaltwelle 17 ein, wie dies für die Ausführungsform gemäß den Fig. 7 bis 10 für die Schaltwalze 1, 1' mit nur einer Steuerkurve 65 erläutert worden ist. Die Steuerkurven 114 bis 117 sind so aufeinander abgestimmt, daß, sobald der eine Gang eingelegt ist, bereits über die jeweils andere Kupplung 16a' bzw. 16a" schon der nächste Gang des Schaltgetriebes vorgewählt werden kann. Sobald diese Vorwahl erfolgt ist, wird das Schneckengetriebe 98 so gedreht, daß die Achse 96 in der gewünschten Richtung verschoben wird.

Wie Fig. 17 zeigt, ist die Steuerkurve 114 den Gängen 1 und 3, die Steuerkurve 115 den Gängen 5 und 7, die Steuerkurve 116 dem Rückwärtsgang R und dem Gang 2 und die Steuerkurve 117 den Gängen 4 und 6 zugeordnet. Jede Steuerkurve hat in Umfangsrichtung der Schaltwalze 1a verlaufende Kurvenabschnitte, die der Neutralstellung N des Schaltgetriebes entsprechen. Die Steuerkurve 114 hat den im Umfangsrichtung verlaufenden, der Neutralstellung N zugeordneten Kurvenabschnitt 118, von dem schräge Kurvenabschnitte 119, 120 und 121, 122 abgehen. Über die schrägen Kurvenabschnitte 119, 120 gelangt der in die Steuerkurve 114 eingreifende Kulissenstein in den parallel zum Kurvenabschnitt 118 verlaufenden Kurvenabschnitt 123, in den der Kulissenstein gelangt, wenn der erste Gang eingelegt werden soll. Dementsprechend verbinden die beiden auf der anderen Seite des in Umfangsrichtung verlaufenden Kurvenabschnittes 118 liegenden schrägen Kurvenabschnitte 121, 122 einen parallel zum Kurvenabschnitt 118 liegenden Kurvenabschnitt 124, der dem dritten Gang des Schaltgetriebes zugeordnet ist.

Vom geraden Kurvenabschnitt 125 der Steuerkurve 115 gehen ebenfalls schräge Kurvenabschnitte 126, 127 und 128, 129 ab, die jeweils an parallel zum Kurvenabschnitt 125 verlaufende Kurvenabschnitte 130, 131 anschließen. Diese beiden Kurvenabschnitte 130, 131 liegen beiderseits des der Neutralstellung N zugeordneten Kurvenabschnittes 125. Der Kurvenabschnitt 130 ist dem fünften Gang und der Kurvenabschnitt 131 dem siebten Gang des Schaltgetriebes zugeordnet.

Die Steuerkurve 116 hat den in Umfangsrichtung verlaufenden, der Neutralstellung zugeordneten Kurvenabschnitt 132, von dem die schrägen Kurvenabschnitte 133, 134 und 135, 136 abgehen. Sie führen zu parallel zum Kurvenabschnitt 132 verlaufenden Kurvenabschnitten 137 und 138, die beiderseits des Kurvenabschnittes 132 liegen. Der Kurvenabschnitt 137 ist dem Rückwärtsgang R und der Kurvenabschnitt 138 dem zweiten Gang des Schaltgetriebes zugeordnet.

Die Steuerkurve 117 schließlich hat den in Umfangsrichtung verlaufenden, der Neutralstellung N zugeordneten Kurvenabschnitt 139, von dem die schrägen Kurvenabschnitte 140, 141 und 142, 143 abgehen. Sie führen den Kulissenstein zu parallel zum Kurvenabschnitt 139 verlaufenden Kurvenabschnitten 144, 145, die beiderseits des Kurvenabschnittes 139 liegen. Befindet sich der Kulissenstein im Kurvenabschnitt 144, dann ist der vierte Gang eingelegt, während der sechste Gang eingelegt ist, wenn sich der Kulissenstein im Kurvenabschnitt 145 befindet.

Die Steuerkurven 114, 115, über welche die Gänge 1, 3, 5, 7 eingelegt werden, sind der Kupplung 16a' zugeordnet, während die Steuerkurven 116, 117 für den Rückwärtsgang und die Gänge 2, 4, 6 der Kupplung 16a" zugeordnet sind. Aufgrund dieser Aufteilung auf die beiden Kupplungen ist es in der beschriebenen Weise möglich, bereits den nächsten Gang vorzuwählen, während das Fahrzeug noch mit einem unteren oder oberen Gang fährt.

Die Schaltwalze 1a kann so ausgebildet sein, daß nach Einlegen des höchsten Ganges die Schaltwalze zurückgedreht werden muß, um zu den niederen Gängen zu gelangen. Es ist aber auch möglich, die Schaltwalze 1a so auszubilden, daß sie in diesem Falle im gleichen Drehsinn weitergedreht wird, um vom höchsten Gang in die niederen Gänge zu gelangen. Die zugehörige Steuerung ist entsprechend ausgelegt.

Da für die beiden Kupplungen 16a', 16a" nur die einzige Schaltwalze 1a vorgesehen ist, hat die Stelleinrichtung einen sehr einfachen Aufbau. Dafür müssen allerdings die Gänge des Schaltgetriebes durchgeschaltet werden, d.h. es müssen beispielsweise ausgehend vom ersten Gang alle dazwischen liegenden Gänge durchgeschaltet werden, um beispielsweise in den fünften Gang zu schalten. Werden hingegen zwei Schaltwalzen eingesetzt (Fig. 2 und 4), dann kann wahlweise beispielsweise aus dem ersten Gang direkt in den dritten oder vierten Gang geschaltet werden.

Die den Gängen des Schaltgetriebes zugeordneten geraden Kurvenabschnitte 123, 124; 130, 131; 137, 138; 144, 145 sind in Umfangsrichtung der Schaltwalze 1a so lang, daß die aufeinanderfolgenden Gängen zugeordneten Kurvenabschnitte einander überlappen (Fig. 17). Dadurch ist die beschriebene Vorwahl des nächsten Ganges möglich.

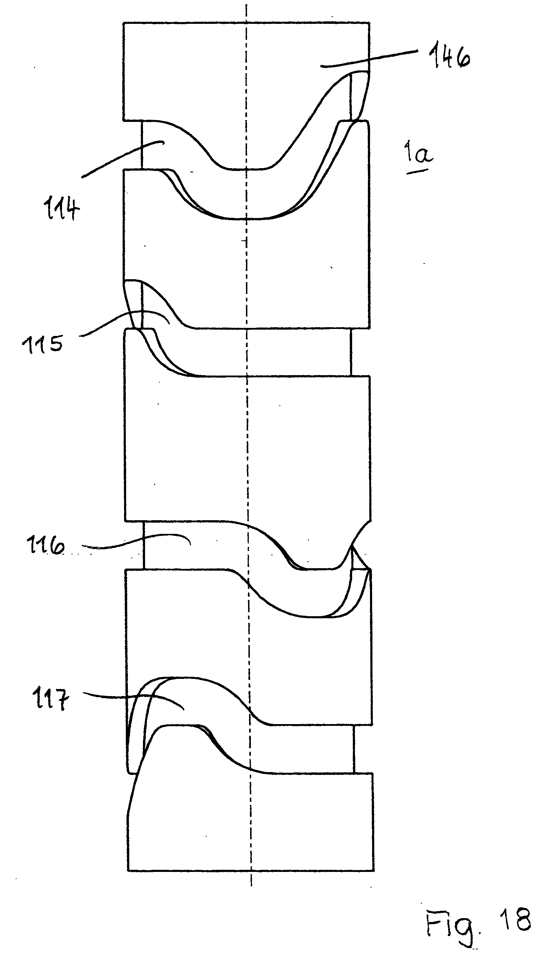

Fig. 18 zeigt die Schaltwalze mit einem zylindrischen Walzenkörper 146, in dem mit axialem Abstand die Steuerkurven 114 bis 117 als Vertiefungen vorgesehen sind.

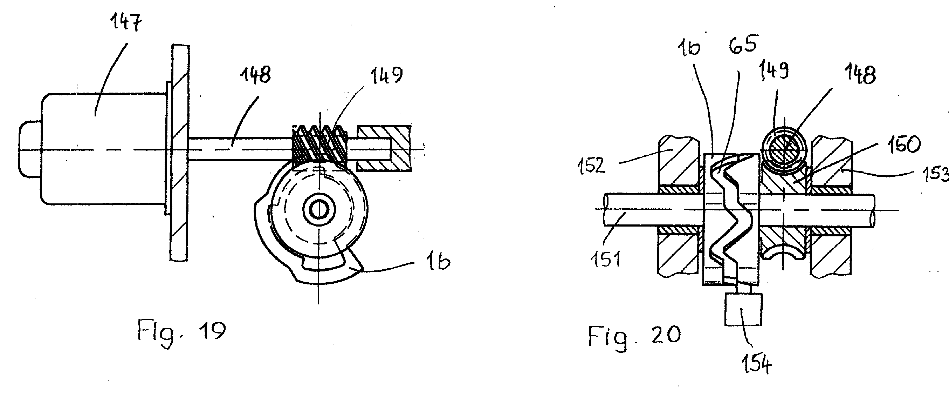

Die Fig. 19 und 20 zeigen ein Ausführungsbeispiel, wie die Schaltwalze mechanisch gedreht werden kann. Hierfür ist ein Elektromotor 147 vorgesehen, auf dessen Motorwelle 148 eine Schnecke 149 drehfest sitzt, die in ein Schneckenrad 150 eingreift, das drehfest auf einer Welle 151 sitzt. Auf ihr sitzt außerdem drehfest die Schaltwalze 1b. Sie ist im dargestellten Ausführungsbeispiel entsprechend der Ausführungsform nach den Fig. 7 bis 10 ausgebildet und hat die einzige Steuerkurve 65. Die Welle 151 ist in Lagern 152, 153 drehbar abgestützt.

In die Steuerkurve 65 der Schaltwalze 1b greift ein Schaltfinger 154 ein, mit dem die (nicht dargestellte) Schaltwelle gedreht und axial verschoben wird, wie anhand der Fig. 7 bis 10 im einzelnen erläutert worden ist. Mit dem Schneckengetriebe 149, 150 kann die Schaltwalze 1b in der gewünschten Richtung um das gewünschte Maß gedreht werden. Hierbei wird der in die Steuerkurve 65 eingreifende Schaltfinger 154 entsprechend geschwenkt und verschoben, wie anhand des Kulissensteines 66 und des Armes 67 der Ausführungsform nach den Fig. 7 bis 10 erläutert worden ist. Dementsprechend wird die Schaltwelle zur Gassenwahl und zum Einlegen des Ganges um ihre Achse gedreht bzw. in ihrer Achsrichtung verschoben.

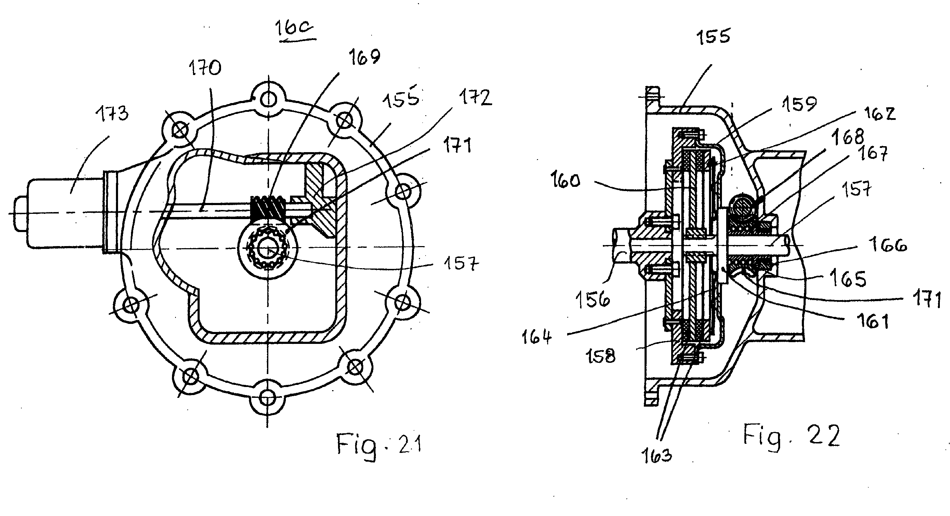

Die Fig. 21 und 22 zeigen eine Kupplung, die mechanisch mit einem Schneckengetriebe betätigt werden kann. Die Kupplung ist im dargestellten Ausführungsbeispiel so ausgebildet, daß durch Druck die Kupplung geöffnet wird. Der mechanische Antrieb kann aber auch bei Kupplungen eingesetzt werden, die bei Druck geschlossen werden. Die Kupplung 16c ist im Getriebegehäuse 155 untergebracht und hat eine Kurbelwelle 156, die-mit der Getriebewelle 157 fluchtet. Die Kurbelwelle 156 ist mit einem Schwungrad 158 drehfest verbunden, das zusammen mit einem Gehäuseteil 159 eine Mitnehmerscheibe 160 umgibt. Sie sitzt drehfest auf der Getriebewelle 157, ist jedoch begrenzt axial relativ zu ihr verschiebbar.

Die Getriebewelle 157 ist mit einem Ausrücklager 161 versehen, das auf eine Druckplatte 162 einwirken kann, die über Kupplungsbeläge mit der Mitnehmerscheibe 160 zusammenwirken kann. Die Druckplatte 162 ist durch eine Tellerfeder 164 in Richtung auf die Mitnehmerscheibe 160 belastet.

Das Getriebegehäuse 155 hat einen Aufnahmeraum 165 für wenigstens ein Lager 166, mit dem die Getriebewelle 157 drehbar abgestützt ist. Auf ihr sitzt eine Ausrückspindel 167, die mit einem Schneckentrieb 168 betätigbar ist. Er hat eine Schnecke 169, die auf einer Motorwelle 170 sitzt, die sich senkrecht zur Getriebewelle 157 erstreckt. Die Schnecke 169 kämmt mit einem Schneckenrad 171, mit dem über die Ausrückspindel 167 die Getriebewelle 157 axial in Richtung auf die Kurbelwelle 157 verschoben werden kann. Über das Ausrücklager 161 werden dabei die Kupplungsbeläge 163 fest gegeneinander gedrückt und auf diese Weise die Kupplung 16c geöffnet.

Die Motorwelle 170 ist mit ihrem freien Ende in einem Lager 172 des Getriebegehäuses 155 drehbar abgestützt. Der Elektromotor 173 ist an der Außenseite des Getriebegehäuses 155 (Fig. 21) vorgesehen.

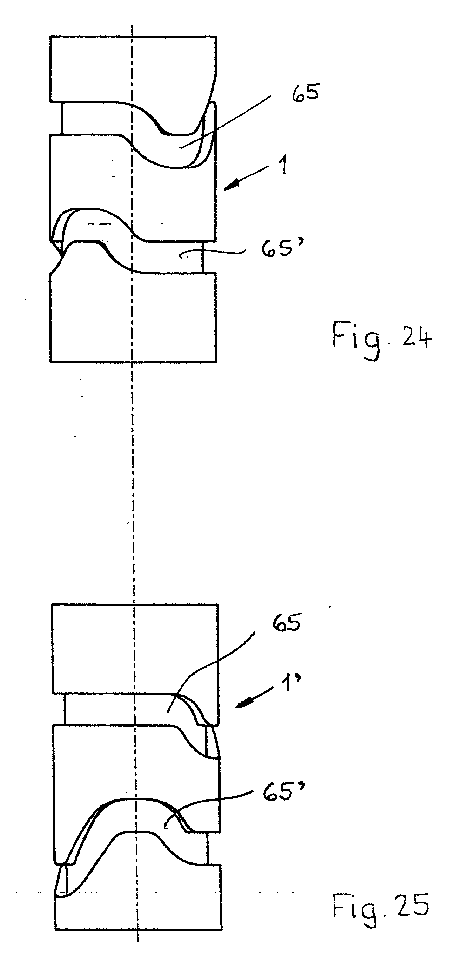

Die Fig. 24 und 25 zeigen die beiden Schaltwalzen 1, 1' der Ausführungsform gemäß Fig. 4. Die beiden Schaltwalzen sind grundsätzlich gleich ausgebildet wie die Schaltwalze 1 gemäß den Fig. 10 und 11. Die Schaltwalze 1 ist für die Gänge 1, 3, 5, R und die Schaltwalze für die Gänge 2, 4, 6 des Schaltgetriebes vorgesehen. Dementsprechend hat jede Schaltwalze nur zwei Steuerkurven 65, 65', die grundsätzlich gleich ausgebildet sind wie die Steuerkurve 65 der Schaltwalze 1 gemäß den Fig. 10 und 11. Die Steuerkurven 65, 65' haben dementsprechend ebenfalls schräg zur Umfangsrichtung liegende Kurvenab schnitte, wie anhand der Fig. 10 und 11 im einzelnen erläutert worden ist. Außerdem liegen die einzelnen Kurvenabschnitte in unterschiedlichem Radialabstand zur Achse 174, 174' der Schaltwalzen 1, 1', wie anhand von Fig. 11 für die Schaltwalze 1 gemäß der Ausführungsform nach Fig. 1 im einzelnen erläutert worden ist. Der in die Steuerkurven 65, 65' eingreifende Kulissenstein hat wie bei den vorigen Ausführungsformen gleiche Breite wie die Steuerkurven 65, 65', so daß er beim Drehen der Schaltwalzen 1, 1' einwandfrei geführt wird und über den Arm 67 (Fig. 7 bis 9) die Schaltwelle 17 einwandfrei verschoben und gedreht werden kann, um die Gassen des Schaltgetriebes auszuwählen und die Gänge einzulegen.

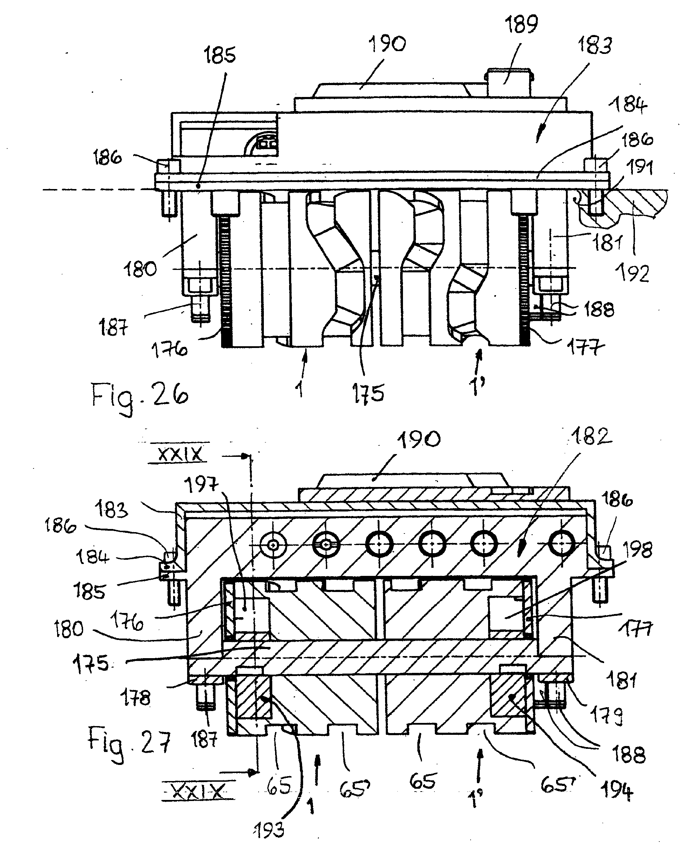

Die Fig. 26 bis 29 zeigen beispielhaft eine Ausführungsform einer Stelleinrichtung, wie sie bei der Ausführungsform gemäß Fig. 4 verwendet werden kann. Sie hat die beiden Schaltwalzen 1, 1'; von denen die Schaltwalze 1 für die Gänge 1, 3, 5, R und die Schaltwalze 1' für die Gänge 2, 4, 6 des Schaltgetriebes vorgesehen ist. Beide Schaltwalzen 1, 1' sitzen auf einer gemeinsamen Achse 175, die mit ihren beiden Enden drehfest gelagert ist. Die Schaltwalzen 1, 1' sitzen drehbar auf der gemeinsamen Achse 175 und sind mit den nutenförmigen Steuerkurven 65, 65' versehen, in welche die Kulissensteine 66 (Fig. 7 bis 9) der Arme 67 eingreifen, die drehfest und axialfest auf der Schaltwelle 17 sitzen. Die Arme 67 bilden die Schaltgabeln des Schaltgetriebes. Durch Drehen der Schaltwalzen 1, 1' wird die Schaltwelle 17 im erforderlichen Maße um ihre Achse gedreht sowie axial verschoben.

Die beiden Schaltwalzen sind an ihren voneinander abgewandten Stirnseiten jeweils mit einer Positionserkennung 176, 177 versehen, mit der die Drehlage der Schaltwalzen 1, 1' zuverlässig erfaßt werden kann. Dadurch ist gewährleistet, daß die jeweiligen Gänge des Schaltgetriebes zuverlässig eingelegt sind.

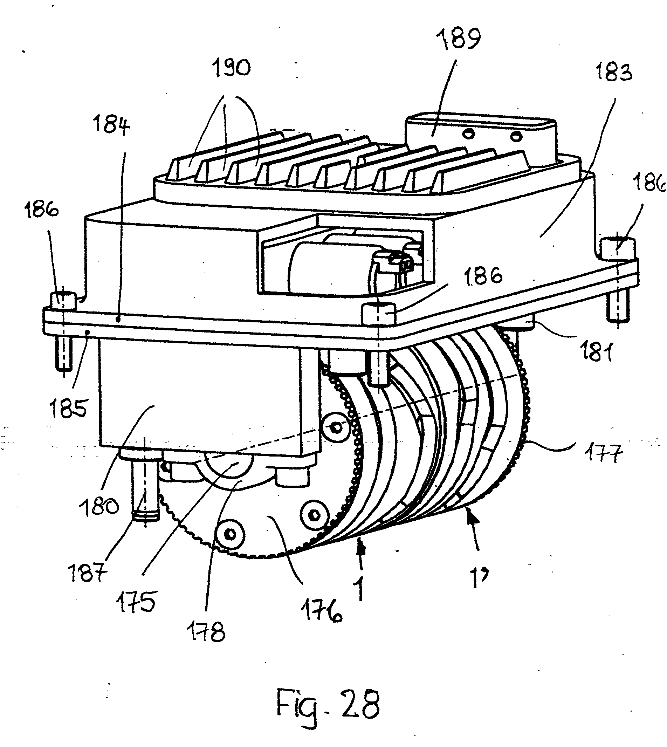

Die Achse 175 ist, wie sich aus den Fig. 27 und 28 ergibt, mit ihren Enden in Lageraugen 178, 179 aufgenommen, die am unteren Ende von jeweils einem nach unten abstehenden Gehäuseteil 180, 181 eines Gehäuses 182 vorgesehen sind. Das Gehäuse 182 sitzt in einem wannenartigen, vorzugsweise spritzwasserdichten Gehäuse 183, das einen umlaufenden, nach außen abstehenden Rand 184 aufweist, der auf einem umlaufenden, nach außen abstehenden Rand 185 des Gehäuses 182 aufliegt. Die beiden Ränder 184, 185 haben vorteilhaft gleiche Breite und vorteilhaft gleichen Umriß. Die beiden Gehäuse 182, 183 sind durch Schrauben 186 miteinander verbunden, die längs des Umfanges der Ränder 184, 185 verteilt angeordnet sind.

Im Gehäuse 182 sind die Ventile sowie die Steuerung der Stelleinrichtung untergebracht. Außerdem befindet sich im Gehäuse 182 die Ölverteilung.

Von den beiden schmalen Gehäuseteilen 180, 181 stehen nach unten Steckkontakte 187, 188 für die Steuer- und Versorgungsleitungen für die Hydraulik ab. Auf dem Gehäuse 183 ist ein Stecker 189 vorgesehen. Im Bereich neben ihm stehen von der Oberseite des Gehäuses 183 Kühlrippen 190 ab, die sich vorteilhaft parallel zueinander und senkrecht zum Stecker 189 erstrecken.

Die Stelleinrichtung wird in eine Einbauöffnung 191 des Getriebegehäuses 192 eingesetzt. Der Rand 185 des Gehäuses 182 liegt innerhalb der umlaufenden Dichtfläche zum Getriebegehäuse 192. Mit den Schrauben 186 wird die Stelleinrichtung am Getriebegehäuse 192 befestigt.

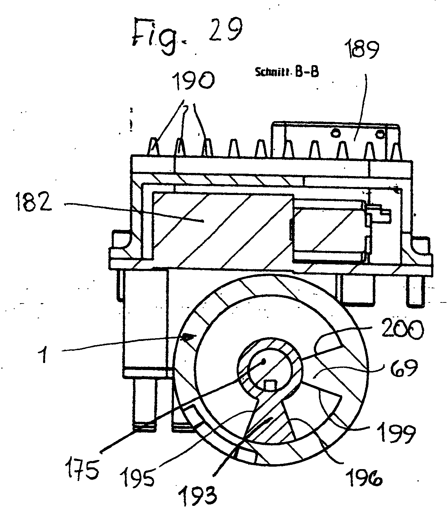

Auf der Achse 175 sitzt benachbart zu den Positionserkennungsscheiben 176, 177 jeweils ein Finger 193, 194, der von der Achse 175 radial absteht (Fig. 27 und 29) und axial fest auf ihr sitzt. Die Finger 193, 194 haben, wie Fig. 29 für den Finger 193 zeigt, radial liegende Seitenflächen 195, 196, die als gehäusefeste Anschlagflächen für den Flügel 69 dienen, der radial von der Innenseite einer stirnseitigen Vertiefung 197, 198 der Schaltwalzen 1, 1' absteht (Fig. 27 und 29). Die Schaltwalze 1, 1' kommt mit den radial liegenden Seitenwänden 199, 200 des Flügels 69 in den Endstellungen an den Seitenwänden 195, 196 des Fingers 193, 194 zur Anlage.

In der Einbaulage sind die Vertiefungen 197, 198 an den voneinander abgewandten Stirnseiten der Schaltwalzen 1, 1' mit Öl gefüllt. Das Gehäuse 193 mit den darin befindlichen Ventilen und der Steuerelektronik befindet sich, wie sich aus Fig. 26 ergibt, außerhalb des Getriebegehäuses 192. Die Ölzuführung erfolgt durch (nicht dargestellte) axiale Kanäle in der Achse 175, von denen in Höhe der Vertiefungen 197, 198 radiale Querbohrungen abzweigen, über die das axial in der Achse 175 zugeführte Öl in die Vertiefungen 197, 198 gelangen kann.

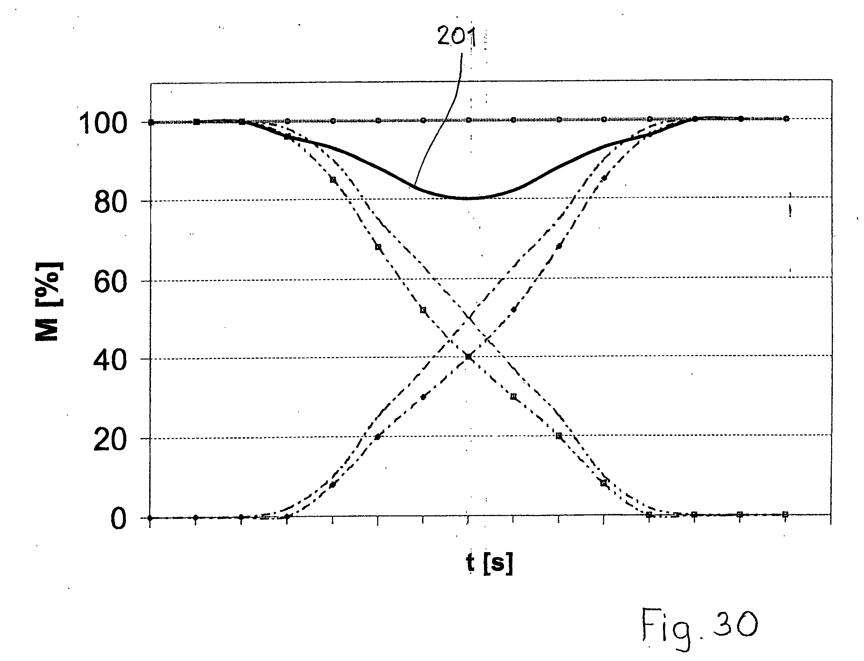

Die Stelleinrichtung ist, wie sich aus den Fig. 26 bis 29 ergibt, sehr kompakt ausgebildet. Die beiden koaxial zueinander liegenden Schaltwalzen 1, 1' benötigen nur wenig Einbauraum. Da die Steuerkurven 65, 65' sowohl zum Drehen der Schaltwelle als auch zu deren Axialverschiebung herangezogen werden, trägt diese Ausbildung der Steuerkurven zu einer sehr kompakten Bauweise der Stelleinrichtung bei. Fig. 30 zeigt ein Drehmoment-Zeit-Diagramm der Doppelkupplungssteuerung, wie sie beispielhaft in den Fig. 4 und 26 bis 29 dargestellt ist. Die beiden Kennlinien der Kupplungen 16, 16' überschneiden einander, um ein negatives Moment, das heißt Lastwechselreaktion des Kraftfahrzeuges, zu vermeiden. Das Beispiel gemäß Fig. 30 zeigt eine Auslegung mit einem Momentenverlauf während des Kupplungsvorganges, bei dem die Kupplung 16 (Fig. 4) öffnet und die andere Kupplung 16' schließt. Das Gesamtmoment, gekennzeichnet durch die Kennlinie 201, ist abhängig vom Verschleiß und der Toleranzlage der beiden Kupplungen 16, 16'. Darum bestehen für beide Kupplungen jeweils zwei Kennlinien mit Minimal- und Maximalwerten für das Drehmoment, abhängig vom Kupplungsweg. Ist die eine Kupplung geschlossen, ist die jeweils andere Kupplung geöffnet. Dementsprechend beträgt das zu übertragende Drehmoment der einen Kupplung 0 % und das der anderen Kupplung 100 %. Während des Schaltvorganges wird das Gesamtmoment nur im Bereich zwischen 80 % und 100 % verringert, wie die Kennlinie 201 zeigt.

## Patentansprüche

1. Stelleinrichtung für automatisierte Handschaltgetriebe von Fahrzeugen, vorzugsweise Kraftfahrzeugen, mit wenigstens einem drehbaren Schaltelement, mit dem eine Schaltwelle des Getriebes zum Auswählen der Gassen sowie Einlegen der Gänge drehbar und axial verschiebbar ist,
**dadurch gekennzeichnet, daß** zum Drehen und zum Axialverschieben der Schaltwelle (17) jeweils nur ein Ventil (2, 15) vorgesehen ist, mit dem das Schaltelement (1, 1', 1a, 1b) betätigbar ist.

2. Stelleinrichtung nach Anspruch 1,
**dadurch gekennzeichnet, daß** das Schaltelement (1, 1', 1a, 1b) als Schaltwalze ausgebildet ist, die wenigstens eine vorteilhaft über den Umfang der Schaltwalze (1, 1', 1a, 1b) verlaufende Steuerkurve (65, 65') aufweist.

3. Stelleinrichtung nach Anspruch 2,
**dadurch gekennzeichnet, daß** in die Steuerkurve (65, 65') wenigstens ein Kulissenstein (66) eingreift, der mit der Schaltwelle (17) verbunden ist und vorteilhaft von einem Arm (67) absteht, der sich quer zur Schaltwelle (17) erstreckt und drehfest sowie axial fest auf ihr sitzt.

4. Stelleinrichtung, insbesondere nach einem der Ansprüche 1 bis 3,
**dadurch gekennzeichnet, daß** das Schaltelement (1, 1', 1a, 1b) wenigstens eine auf einem Zylindermantel liegende Steuerkurve (65, 65') aufweist, die sowohl in Umfangsrichtung als auch in Querrichtung ansteigende bzw. abfallende Kurvenabschnitte (74 bis 79, 80 bis 83) aufweist.

5. Stelleinrichtung nach Anspruch 4,
**dadurch gekennzeichnet, daß** die in Umfangsrichtung ansteigenden bzw. abfallenden Kurvenabschnitte (74 bis 79) in Verbindung mit dem Kulissenstein (66) zum Drehen der Schaltwelle (17) um ihre Achse dienen.

6. Stelleinrichtung nach Anspruch 4 oder 5,
**dadurch gekennzeichnet, daß** die in Querrichtung ansteigenden bzw. abfallenden Kurvenabschnitte (80 bis 83) in Verbindung mit dem Kulissenstein (66) zum Axialverschieben der Schaltwelle (17) dienen.

7. Stelleinrichtung nach einem der Ansprüche 2 bis 6,
**dadurch gekennzeichnet, daß** die Steuerkurve (65, 65') eine Nut im Mantel des Schaltelementes (1, 1', 1a, 1b) ist.

8. Stelleinrichtung nach Anspruch 7,
**dadurch gekennzeichnet, daß** der Boden der Nut die in Querrichtung ansteigenden bzw. abfallenden Kurvenabschnitte (80 bis 83) aufweist.

9. Stelleinrichtung nach einem der Ansprüche 1 bis 8,
**dadurch gekennzeichnet, daß** das Schaltelement (1, 1', 1a, 1b) wenigstens einen Rotationskolben (69) aufweist, der in einem Druckraum (70) drehbar ist und dessen Drehweg vorteilhaft durch wenigstens einen Anschlag (193) begrenzt ist.

10. Stelleinrichtung nach Anspruch 9,
**dadurch gekennzeichnet, daß** der Rotationskolben (69) auf einer Achse (68) des vorteilhaft axial benachbart zu ihm liegenden Schaltelementes (1, 1', 1a, 1b) drehfest sitzt.

11. Stelleinrichtung, insbesondere nach einem der Ansprüche 1 bis 10,
**dadurch gekennzeichnet, daß** die Schaltwelle (17) in der jeweiligen, einem eingelegten Gang des Schaltgetriebes zugeordneten Drehsstellung durch eine Rasteinrichtung (18) rastend gehalten ist.

12. Stelleinrichtung nach Anspruch 11,
**dadurch gekennzeichnet, daß** auf der Schaltwelle (17) drehfest wenigstens ein Rastgegenglied (28) sitzt, in das wenigstens ein Rastglied (19) eingreift.

13. Stelleinrichtung nach Anspruch 12,
**dadurch gekennzeichnet, daß** das Rastgegenglied (28) eine der Zahl der möglichen Drehstellungen der Schaltwelle (17) entsprechende Zahl von Rastvertiefungen (30) aufweist, die vorteilhaft in Achsrichtung der Schaltwelle (17) eine Länge haben, die wenigstens dem maximalen Verschiebeweg der Schaltwelle (17) entspricht.

14. Stelleinrichtung nach Anspruch 12 oder 13,
**dadurch gekennzeichnet, daß** das vorteilhaft unter der Kraft wenigstens einer Druckfeder (21) stehende und mit Druckmedium beaufschlagbare Rastglied (19) ein druckbelasteter Rastbolzen ist.

15. Stelleinrichtung, insbesondere nach einem der Ansprüche 1 bis 14,
**dadurch gekennzeichnet, daß** zwei Schaltelemente (1, 1') vorgesehen sind, auf die die Gänge des Schaltgetriebes aufgeteilt sind.

16. Stelleinrichtung nach Anspruch 15,
**dadurch gekennzeichnet, daß** die beiden Schaltelemente (1, 1') gleichachsig zueinander liegen.

17. Stelleinrichtung nach Anspruch 15 oder 16,
**dadurch gekennzeichnet, daß** die beiden Schaltelemente (1, 1') auf einer gemeinsamen Achse (175) sitzen.

18. Stelleinrichtung nach einem der Ansprüche 15 bis 17,
**dadurch gekennzeichnet, daß** jedem Schaltelement (1, 1') ein Schaltventil (2, 2') zur Betätigung zugeordnet ist.

19. Stelleinrichtung, insbesondere nach einem-der Ansprüche 1 bis 18,
**dadurch gekennzeichnet, daß** das Schaltelement (1, 1', 1a, 1b) eine stirnseitige Vertiefung (197, 198) aufweist, in der der Anschlag (193) liegt, der drehfest auf der gemeinsamen Achse (175) sitzt.

20. Stelleinrichtung nach Anspruch 19,
**dadurch gekennzeichnet, daß** in die Vertiefung (197, 198) wenigstens eine, vorteilhaft durch die gemeinsame Achse (175) verlaufende Druckmittelleitung mündet.

21. Stelleinrichtung, insbesondere nach einem der Ansprüche 1 bis 20,
**dadurch gekennzeichnet, daß** für jedes Schaltelement (1, 1') jeweils eine Kupplung (16, 16') vorgesehen ist.

22. Stelleinrichtung nach Anspruch 21,
**dadurch gekennzeichnet, daß** die beiden Kupplungen (16, 16') durch eine Sicherheitseinrichtung (53) gegen gleichzeitiges Schließen gesichert sind, die vorteilhaft zwei Druckregelventile (44, 44') aufweist, die jeweils einer Kupplung (16, 16') vorgeschaltet sind.

23. Stelleinrichtung, insbesondere nach einem der Ansprüche 1 bis 22,
**dadurch gekennzeichnet, daß** sie eine Doppelkupplung (16a, 16a') aufweist, die über einen Schneckentrieb (98) betätigbar ist.

24. Stelleinrichtung nach Anspruch 23,
**dadurch gekennzeichnet, daß** die Doppelkupplung (16a, 16a') zwei Kupplungsscheiben (99, 100) aufweist, die gleichsinnig und gleichzeitig verschiebbar und vorteilhaft mit einer Spindel (97) im Eingriff sind, die durch den Schneckentrieb (98) drehbar ist.

25. Stelleinrichtung, insbesondere nach Anspruch 24,
**dadurch gekennzeichnet, daß** für wenigstens die eine, vorzugsweise für beide Kupplungsscheiben (99, 100) eine Nachstelleinrichtung (113) vorgesehen ist.

26. Stelleinrichtung nach Anspruch 25,
**dadurch gekennzeichnet, daß** die Nachstelleinrichtung (113) einen druckbelasteten, vorteilhaft an der Spindel (97) gelagerten Rastzahn (112) aufweist, der in eine Klinkenverzahnung (111) der Kupplungsscheibe (99, 100) eingreift.
